# EUROPÄISCHE PATENTSCHRIFT

(11) **EP 4 217 089 B1**
(45) Veröffentlichungstag und Bekanntmachung des Hinweises auf die Patenterteilung: **02.10.2024**
(21) Anmeldenummer: 21762372.7
(22) Anmeldetag: 04.08.2021
(51) Int. Cl.: B01D 46/00, B01D 39/16, B01D 46/24, B01D 46/52, B29C 64/10, B33Y 80/00

(54) **EIGENSTABILES DURCHSTRÖMUNGSPORÖSES FILTERELEMENT UND VERFAHREN ZUR HERSTELLUNG EINES SOLCHEN FILTERELEMENTS**
INHERENTLY STABLE, FLOW-POROUS FILTER ELEMENT AND METHOD FOR PRODUCING SUCH A FILTER ELEMENT
ÉLÉMENT FILTRANT POREUX INTRINSÈQUEMENT STABLE ET PROCÉDÉ DE FABRICATION D'UN TEL ÉLÉMENT FILTRANT

(30) Priorität: 22.09.2020 DE 102020124689
(43) Veröffentlichungstag der Anmeldung: 02.08.2023
(73) Patentinhaber: Herding GmbH Filtertechnik, 92224 Amberg (DE)
(72) Erfinder: HERDING, Urs, 92224 Amberg (DE); HAJEK, Stefan, 92224 Amberg (DE); RAABE, Julian, 92224 Amberg (DE)
(74) Vertreter: Schmitt-Nilson Schraud Waibel Wohlfrom Patentanwälte Partnerschaft mbB
(86) Internationale Anmeldenummer: PCT/EP2021/071814
(87) Internationale Veröffentlichungsnummer: WO 2022/063470

(56) Entgegenhaltungen:
- WO-A1-2017/157930
- CN-A- 105 041 529
- DE-A1- 102019 107 161
- US-A1- 2017 072 589
- US-A1- 2020 023 294

## Beschreibung

Die Erfindung betrifft ein eigenstabiles durchströmungsporöses Filterelement zur Filterung von Fremdstoffen aus einem Gasstrom. Ferner betrifft die Erfindung auch ein Verfahren zur Herstellung eines eigenstabilen, durchströmungsporösen Filterelements zur Filterung von Fremdstoffen aus einem Gasstrom.

Solche Filterelemente werden in Fabriken und Anlagen verschiedenster Industriezweige, bspw. in der Automobilindustrie, der Chemieindustrie, der Lebensmittelindustrie oder bei der Herstellung von Baustoffen, eingesetzt.

Bisher werden Filterkörper solcher Filterelemente gesintert und anschließend mit einer Oberflächenfiltrationsschicht versehen, bspw. in Form einer Sprühbeschichtung. Verfahrensbedingt werden die Filterkörper hierbei meistens in mehreren Teilstücken gefertigt, die anschließend zu einem Filterkörper zusammengefügt werden. Das Sinterverfahren erlaubt die Herstellung von eigenstabilen Filterelementen in großer Stückzahl, unterliegt aber bestimmten Beschränkungen, etwa hinsichtlich der verwendbaren Kunststoffe oder des Aufbaus von Filterkörper und/oder Oberflächenfiltrationsschicht.

Dokument US 2017 072589 A1 offenbart ein porösen Körper und ein Verfahren zur additiven Herstellung des porösen Körpers, welcher ein Wabenfilter bildet und der Reinigung von Abgas (DPF) dient.

Dokument US 2020 023294 A1 offenbart ein eigenstabiles, durchströmungsporöses Filterelement zur Filterung von Fremdstoffen aus einem Gasstrom, umfassend: einen Filterkörper aus Kunststoff mit einer Zuströmseite und einer gegenüberliegenden Abströmseite, wobei der Filterkörper eine in einem additiven Herstellungsprozess gefertigte dreidimensionale Struktur aufweist.

Der Erfindung liegt die Aufgabe zugrunde, ein eigenstabiles, durchströmungsporöses Filterelement zur Filterung von Fremdstoffen aus einem Gasstrom mit einem porösen Filterkörper und einer auf der Zuströmseite des Filterkörpers ausgebildete Oberflächenfiltrationsschicht zur Verfügung zu stellen, das diesen Beschränkungen nicht unterliegt.

Erfindungsgemäß wird ein eigenstabiles, durchströmungsporöses Filterelement zur Filterung von Fremdstoffen aus einem Gasstrom vorgeschlagen, umfassend einen Filterkörper aus Kunststoff mit einer Zuströmseite und einer gegenüberliegenden Abströmseite, wobei auf der Zuströmseite eine Oberflächenfiltrationsschicht ausgebildet ist. Der Filterkörper weist eine in einem additiven Herstellungsprozess gefertigte dreidimensionale Stützstruktur auf, die Hohlräume aufweist, durch welche Gas von der Zuströmseite zu der Abströmseite strömen kann. Die Oberflächenfiltrationsschicht füllt wenigstens teilweise die Hohlräume der dreidimensionalen Stützstruktur aus.

Weiter wird erfindungsgemäß ein Verfahren zur Herstellung eines eigenstabilen, durchströmungsporösen Filterelements zur Filterung von Fremdstoffen aus einem Gasstrom vorgeschlagen, bei dem ein Filterkörper aus Kunststoff mit einer Zuströmseite und einer gegenüberliegenden Abströmseite ausgebildet wird. Das Verfahren weist zumindest die folgenden Schritte auf: Herstellen einer dreidimensionalen Stützstruktur mittels eines additiven Fertigungsverfahrens, derart dass in der dreidimensionalen Stützstruktur Hohlräume ausgebildet werden, durch welche Gas von der Zuströmseite zu der Abströmseite strömen kann, und Ausbilden einer Oberflächenfiltrationsschicht durch teilweises Ausfüllen der Hohlräume der dreidimensionalen Stützstruktur mit einem Beschichtungsmaterial.

Die dreidimensionale Stützstruktur soll mittels eines additiven Fertigungsverfahrens hergestellt sein, insbesondere durch Lasersintern, Stereolithographie, insbesondere UV basierte Stereolithographie oder Low Force Stereolithographie, DLP, Binderjetting, Particle Jetting, oder FDM. Jedes dieser Verfahren führt zu einer charakteristischen Struktur der sich daraus ergebenden dreidimensionalen Stützstruktur und ggf. andere Teile des Filterkörpers, die auf dieselbe Weise und insbesondere im selben Herstellungsprozess hergestellt sind wie die dreidimensionale Stützstruktur.

Die additive Herstellungsweise ermöglicht es, den Filterkörper mit jeweils gewünschter Geometrie und mechanischen Eigenschaften wie Festigkeit und Steifigkeit herzustellen, ohne durch herkömmliche Verfahren bedingten Beschränkungen zu unterliegen. Die additive Fertigungsweise bietet auch die Möglichkeit, zusammen mit dem Filterkörper die dreidimensionale Stützstruktur herzustellen. Additive Fertigungsverfahren benötigen keine Formen oder Schalungen mehr, die die Geometrie des zu fertigenden Bauteils vorgeben, sondern erzeugen das Bauteil computergesteuert auf Basis von digitalen 3D-Konstruktionsdaten. Auf diese Weise können Filterelemente beliebiger Größe und Geometrie in einem Verfahren gefertigt werden, insbesondere einem einstückigen Filterkörper und ggf. sogar so, dass Filterkörper, Anschlusselemente und wenigstens Teile der Oberflächenfiltrationsschicht oder Teile zum Anbinden einer in einem separaten Herstellungsprozess aufgebrachten Oberflächenfiltrationsschicht, einstückig sind, d.h. aus einem Stück hergestellt sind. Der Filterkörper und solche Teile können in einem einzigen Druckprozess hergestellt werden, auch wenn sie unterschiedliche Geometrien aufweisen oder wenn Unterschiede hinsichtlich das Materials, aus dem der Filterkörper bzw. die einzelnen Teile hergestellt werden, vorhanden sind. Filterelemente, die mit einer additiven Herstellungsweise hergestellt worden sind, sind insbesondere daran zu erkennen, dass Filterkörper und ggf. weitere Teile, die mittels additiver Fertigung hergestellt werden, üblicherweise Geometrien aufweisen, die mit einem Gussverfahren nicht verwirklicht werden können, da additiv hergestellte Bauteile zum Beispiel Hohlräume, oder Hinterschnitte und Überhänge aufweisen.

Die dreidimensionale Stützstruktur ermöglicht eine dauerhaft haltbare Verbindung zwischen Oberflächenfiltrationsschicht und Filterkörper, auch bei starker Belastung, wie sie typischerweise im Betrieb zu erwarten ist (beispielsweise in Folge von starker Anströmung durch teilweise abrasive Fremdkörper mitführendem Rohgas und/oder durch Beaufschlagung mit Druckimpulsen während wiederkehrenden Reinigungszyklen). Die dreidimensionale Stützstruktur ist so ausgebildet, dass Partikel der Oberflächenfiltrationsschicht (dies gilt vor allem für nachfolgend noch näher erläuterte Partikel einer ersten Schicht der Oberflächenfiltrationsschicht), sich beim Aufbringen der Oberflächenfiltrationsschicht in der Stützstruktur verkeilen können. Die Hohlräume sind Freiräume in der Stützstruktur, welche von dem Gas durchströmt werden können. Dabei werden die Hohlräume durch die Stützstruktur selbst ausgebildet. Da die dreidimensionale Stützstruktur in einem additiven Fertigungsprozess hergestellt wird, kann sie insbesondere Hohlräume mit der Konfiguration von sogenannten parametrisch gesteuerten Poren aufweisen. Mit diesem Begriff soll zum Ausdruck gebracht werden, dass die in der dreidimensionalen Stützstruktur durch den additiven Herstellungsprozess ausgebildeten Hohlräume bzw. Poren gezielt in Größe und Form eingestellt werden können, um eine entsprechende dreidimensionale Stützstruktur mit Hohlräumen zu fertigen.

Die Stützstruktur sichert zudem die Stabilität des Filterelements während seines Herstellungsprozesses. Insbesondere unterstützt die mittels additiver Fertigung hergestellte Stützstruktur die Stabilität eines Grünlings des Filterelements vor Aushärtung und Nachbearbeitung.

Die Zuströmseite des Filterkörpers beschreibt die Seite, von der her ein mit Fremdstoffen beladener Gasstrom im Filterbetrieb zum Filterelement gelangt und dann durch die Oberflächenfiltrationsschicht eindringt. Die Abströmseite des Filterkörpers beschreibt die Seite, auf der der von Fremdkörpern abgereinigte Gasstrom vom Filterelement abströmt. Die Zuströmseite weist demgemäß in einem eingebauten Zustand des Filterelements in einen Rohgasraum einer Filteranlage, und die Abströmseite des Filterkörpers weist in einen Reingasraum der Filteranlage.

Ein aus Kunststoff hergestellter Filterkörper ergibt sich, wenn der Filterkörper als einen Hauptbestandteil einen Kunststoff aufweist. Neben dem Hauptbestandteil aus Kunststoff können noch weitere Bestandteile, beispielsweise in Form von Zusätzen oder Füllstoffen, im Filterkörper vorhanden sein. Dabei soll es nicht darauf ankommen, ob solche weiteren Bestandteile Kunststoffe sind oder ein Nichtkunststoffmaterial aufweisen. Der Kunststoff zur Herstellung des Filterkörpers kann aus einem Polymermaterial gebildet sein oder aus mehreren Polymermaterialien (etwa in Form eines Polymerblends oder Mischpolymers). Wenn im Folgenden von der Zusammensetzung eines Kunststoffs die Rede ist, etwa im Zusammenhang mit dem Filterkörper und/oder der Oberflächenfiltrationsschicht, dann ist damit stets gemeint, dass der Kunststoff aus nur einem Polymermaterial oder aus mehreren Polymermaterialien gebildet sein kann. Der Begriff Polymermaterial ist allgemein zu verstehen und soll sowohl aus gleichartigen Monomeren aufgebaute Homopolymere umfassen als auch Copolymere wie Blockcopolymere und andere aus verschiedenartigen Monomeren aufgebaute Polymere.

Additiv gefertigte Filterelemente können mit einer solchen Genauigkeit hergestellt werden, dass lediglich sehr wenige bis keine Nachbearbeitungsschritte notwendig sind. Auch lassen sich Filterelemente mit unterschiedlichster Geometrie und Grö-βe auf diese Weise fertigen.

Mögliche Aus- und Weiterbildungen sind in den abhängigen Ansprüchen beschrieben und werden nachfolgend erläutert. Diese Aus- und Weiterbildungen sollen sich ausdrücklich sowohl auf das erfindungsgemäße Filterelement als auch auf das erfindungsgemäße Herstellungsverfahren beziehen. Dabei versteht es sich, dass die jeweils beschriebenen Aus- und Weiterbildungen miteinander kombiniert werden können, falls gewünscht, es sei denn, es wird für einzelne Aspekte ausdrücklich darauf verwiesen, dass diese Alternativen zueinander sind.

Insbesondere kann die dreidimensionale Stützstruktur eine zur Zuströmseite hin offene Käfigstruktur aufweisen. Eine solche Käfigstruktur kann insbesondere derart ausgebildet sein, dass Material zur Ausbildung der Oberflächenfiltrationsschicht in einzelnen Hohlräumen aufgenommen ist. Die Hohlräume bilden jeweils eine Art Käfig, so dass in einem jeweiligen Hohlraum aufgenommenes Material von der den Käfig umgebenden dreidimensionalen Stützstruktur gehalten werden kann. Dabei ist die Käfigstruktur insbesondere so ausgebildet, dass Material zur Bildung der Oberflächenfiltrationsschicht nach Herstellung der dreidimensionalen Stützstruktur in einen jeweiligen Käfig eingebracht werden kann. Das Material zur Bildung der Oberflächenfiltrationsschicht kann, jedenfalls beim Einbringen in die Hohlräume der dreidimensionalen Stützstruktur partikelförmig sein. Die Käfigstruktur ist dann derart ausgebildet, dass die jeweils in einen Hohlraum eingebrachten Partikel durch die Käfigstruktur festgehalten werden, so dass jedenfalls der überwiegende Teil von Material, das in einen Hohlraum eingebracht worden ist, dort verbleibt und nicht durch die Bodenseite oder seitliche Begrenzungen des Hohlraums weitertransportiert wird. Um das Festhalten der Partikel in der Käfigstruktur zu unterstützen, kann ein adhäsives System, wie zum Beispiel Klebemittel oder ähnliches, verwendet werden. Das Zurückhalten von Material in den Hohlräumen kann noch dadurch unterstützt werden, dass das Material zur Ausbildung der Oberflächenfiltrationsschicht eine solche Konfiguration aufweist und/oder in einer solchen Weise in die Hohlräume eingebracht wird, dass sich Partikel des Materials in dem Hohlraum miteinander verbinden und Agglomerate bilden. Solche Agglomerate können sich durchaus über mehrere benachbarte Hohlräume hinweg erstrecken und so Brückenstrukturen ausbilden, die zu einer besonders guten Verankerung des Materials für die Oberflächenfiltrationsschicht in den Hohlräumen der Käfigstruktur führen.

Zur Ausbildung einer käfigartigen Struktur kann die dreidimensionale Stützstruktur insbesondere korbartige, becherartige oder trichterförmige Hohlräume mit je einer Bodenseite und einer gegenüber liegenden offenen Seite bilden. Dabei kann die offene Seite zur Zuströmseite weisen, so dass durch die offene Seite auf einfache Weise Material zur Ausbildung der Oberflächenfiltrationsschicht in die Käfigstruktur eingebracht werden kann.

Die korbartigen, becherartigen oder trichterförmigen Hohlräume können jeweils eine seitliche Begrenzung, beispielsweise in der Art einer Seitenwand, aufweisen, die die Bodenseite mit der offenen Seite verbindet und Öffnungen aufweist, durch die benachbarte der korbartigen, becherartigen oder trichterförmigen Hohlräume miteinander in Verbindung stehen. Mittels solcher seitlicher Begrenzungen können Bewegungen von Partikeln des die Oberflächenfiltrationsschicht bildenden Materials in seitlicher Richtung unterbrochen oder jedenfalls so weit behindert und/oder gelenkt werden, dass ein "Herausfallen" dieser Partikel aus dem Hohlraum und Weitertransport in Richtung zur Abströmseite und/oder zur Zuströmseite wirksam unterdrückt wird. Durch die in den seitlichen Begrenzungen ausgebildeten Öffnungen können sich allerdings dennoch Partikel des Materials für die Oberflächenfiltrationsschicht über benachbarte Hohlräume hinweg miteinander verbinden und so Agglomerate oder Brückenstrukturen ausbilden, die über mehrere benachbarte Hohlräume hinweg reichen. Auf diese Weise entsteht eine sichere Verankerung des Materials der Oberflächenfiltrationsschicht in der dreidimensionalen Stützstruktur.

Insbesondere kann die offene Seite eines jeweiligen Hohlraums vordere Öffnungen aufweisen und kann die Bodenseite und/oder die seitliche Begrenzung eines jeweiligen Hohlraums hintere Öffnungen aufweisen. Dabei ist es günstig, wenn - in einer orthogonalen Projektion von der offenen Seite zur Bodenseite - innerhalb einer Fläche, die durch eine vordere Öffnung auf der offenen Seite definiert ist, eine Mehrzahl von hinteren Öffnungen der Bodenseite und/oder der seitlichen Begrenzung liegen. Eine orthogonale Projektion erhält man insbesondere dann, wenn man von der Zuströmseite her mit Blickrichtung orthogonal zur Oberfläche der dreidimensionalen Stützstruktur auf die dreidimensionale Stützstruktur blickt. Dann sieht man die an der Zuströmseite ausgebildeten vorderen Öffnungen sowie innerhalb einer jeweiligen vorderen Öffnung dahinter liegende Öffnungen, die näher zur Abströmseite angeordnet sind. Diese hinteren Öffnungen werden von einer entsprechend weiter zur Abströmseite liegenden Struktur der dreidimensionalen Stützstruktur definiert, etwa der einer die Bodenseite des Hohlraums definierenden Struktur oder einer die seitliche Begrenzung des Hohlraums bildenden Struktur. Man sieht allerdings bei der angesprochenen orthogonalen Projektion nur den Teil der jeweiligen hinteren Öffnungen, der innerhalb der Fläche der vorderen Öffnung an der Zuströmseite liegt. Auf die projizierte Fläche dieses Teils der weiter zur Abströmseite hin liegenden hinteren Öffnungen in Bezug zur Fläche der an der Zuströmseite liegenden vorderen Öffnung soll hierbei abgestellt werden. Blickt man durch die vordere Öffnung in orthogonaler Richtung, so wird man in der Regel eine Mehrzahl von scheinbar kleineren hinteren Öffnungen erblicken. Beispielsweise können die hinteren Öffnungen tatsächlich kleiner sein als die jeweilige vordere Öffnung an der offenen Seite. In diesem Fall können die hinteren Öffnungen relativ zu der vorderen Öffnung beliebig angeordnet sein. Die hinteren Öffnungen, insbesondere hintere Öffnungen an der weiter zur Abströmseite hin liegenden Bodenseite des Hohlraums der Käfigstruktur, können auch genauso groß oder sogar größer sein als die jeweilige vordere Öffnung an der offenen Seite. Dann sollten die hinteren Öffnungen allerdings mit seitlichem Versatz zu der vorderen Öffnung an der offenen Seite angeordnet sein, so dass man in der angesprochenen Projektion, also wenn man von der Zuströmseite her durch die vordere Öffnung an der offenen Seite blickt. immer mehrere hintere Öffnungen wenigstens zum Teil erblickt.

Insbesondere kann die offene Seite eines jeweiligen Hohlraums der dreidimensionalen Stützstruktur nur eine vordere Öffnung aufweisen. In dieser Konfiguration ist also jeder Käfigstruktur genau eine zur Zuströmseite gerichtete vordere Öffnung zugeordnet, durch die Material zur Ausbildung der Oberflächenfiltrationsschicht in die Käfigstruktur aufgenommen werden kann.

Der Filterkörper kann eine zwischen seiner Zuströmseite und seiner Abströmseite verlaufende Dickenrichtung definieren. Dann kann beispielsweise die Oberflächenfiltrationsschicht über mindestens 10 % der Dicke der Oberflächenfiltrationsschicht hinweg Hohlräume der dreidimensionalen Stützstruktur ausfüllen, insbesondere über mindestens 25 % der Dicke der Oberflächenfiltrationsschicht, insbesondere über mindestens 50 % der Dicke der Oberflächenfiltrationsschicht, insbesondere zwischen 25 % und 100 % der Dicke der Oberflächenfiltrationsschicht, insbesondere zwischen 50 % und 75 % der Dicke der Oberflächenfiltrationsschicht. Dies ermöglicht eine vorteilhafte Verbindung der Oberflächenfiltrationsschicht mit dem Filterkörper, insbesondere mit der dreidimensionalen Stützstruktur. Je größer der Anteil der Oberflächenfiltrationsschicht ist, der in Hohlräume der dreidimensionalen Stützstruktur eingebettet ist, umso haltbarer ist die Verbindung der Oberflächenfiltrationsschicht mit der Stützstruktur.

Beispielsweise kann die Oberflächenfiltrationsschicht auch über mindestens 10 % der Dicke der dreidimensionalen Stützstruktur hinweg Hohlräume der dreidimensionalen Stützstruktur ausfüllen, insbesondere über mindestens 25 % der Dicke der dreidimensionalen Stützstruktur, insbesondere über mindestens 50 % der Dicke der dreidimensionalen Stützstruktur, insbesondere zwischen 25 % und 100 % der Dicke der dreidimensionalen Stützstruktur, insbesondere zwischen 50 % und 75 % der Dicke der dreidimensionalen Stützstruktur. Auch dies ermöglicht eine vorteilhafte Verbindung der Oberflächenfiltrationsschicht mit dem Filterkörper, insbesondere mit der dreidimensionalen Stützstruktur. Je weiter die sich die Oberflächenfiltrationsschicht in die Stützstruktur hinein erstreckt, umso haltbarer ist die Verbindung der Oberflächenfiltrationsschicht mit der Stützstruktur. Im Extremfall können Hohlräume der dreidimensionalen Stützstruktur über die gesamte Dicke der dreidimensionalen Stützstruktur mit Material der Oberflächenfiltrationsschicht gefüllt sein. Dann sind praktisch alle der durch die dreidimensionale Stützstruktur gebildeten Hohlräume mit Material der Oberflächenfiltrationsschicht gefüllt. Man kann somit die dreidimensionale Stützstruktur auch als einen Teil der Oberflächenfiltrationsschicht ansehen, insbesondere in solchen Fällen, in denen der Bereich der dreidimensionalen Stützstruktur, der mit Material der Oberflächenfiltrationsschicht gefüllt ist, einen großen Teil der dreidimensionalen Stützstruktur und/oder der Oberflächenfiltrationsschicht einnimmt.

Je nach Konfiguration des Materials der Oberflächenfiltrationsschicht kann der mittlere Füllgrad von Hohlräumen der dreidimensionalen Stützstruktur mit Material für die Oberflächenfiltrationsschicht unterschiedlich groß sein. Dabei kann auch das Beschichtungsverfahren eine Rolle spielen, mittels dem das Material für die Oberflächenfiltrationsschicht aufgebracht wird. Beispielsweise wird man bei einem Beschichtungsmaterial bzw. Beschichtungsverfahren, bei dem eine starke Neigung zur Bildung von Agglomeraten zwischen einzelnen Partikeln von in Hohlräume der dreidimensionalen Stützstruktur eingebrachtem Beschichtungsmaterial, besteht, bereits bei lediglich moderaten Füllgraden, insbesondere 50 % oder weniger, oder etwa 30 bis 50 %, bereits eine starke Verankerung des Beschichtungsmaterials feststellen können, weil sich durch Agglomeration von Partikeln Brückenstrukturen ausbilden, die über mehrere benachbarte Hohlräume hinweg reichen. Bei anderen Beschichtungsmaterialien bzw. -verfahren, etwa auf Basis von Flüssigkeiten, werden höhere Füllgrade erforderlich sein, um eine gewünschte Verankerung des Beschichtungsmaterials in der dreidimensionalen Stützstruktur zu erzielen, etwa mindestens 50 % oder mindestens 75 %, und bis zu 100 %.

Gemäß den vorangehenden Ausführungen kann die Oberflächenfiltrationsschicht integral bzw. einstückig mit dem Filterkörper ausgebildet sein. Dies betrifft insbesondere die dreidimensionale Stützstruktur, die wiederum mit demselben additiven Verfahren und im selben Druckvorgang hergestellt sein kann wie der Filterkörper. In diesem Sinn sind dann Filterkörper und Oberflächenfiltrationsschicht aus einem Stück hergestellt. Dadurch kann die Anzahl der notwendigen Prozessschritte reduziert und Herstellungskosten gesenkt werden. Auch der Zusammenhalt zwischen Filterkörper und Oberflächenfiltrationsschicht ist besonders gut, insbesondere dann, wenn sich die Zusammensetzung von Filterkörper und Oberflächenfiltrationsschicht, insbesondere einer Tragstruktur bzw. "Mutterporenstruktur" des Filterkörpers und der dreidimensionalen Stützstruktur, nur wenig oder gar nicht unterscheiden. Insbesondere können die Tragstruktur des Filterkörpers und die dreidimensionale Stützstruktur aus demselben Material hergestellt sein.

Weiterhin kann vorgesehen sein, dass die Oberflächenfiltrationsschicht eine erste Schicht aufweist, die wenigstens zum Teil, insbesondere zu ihrem größeren Teil, Hohlräume der dreidimensionalen Stützstruktur ausfüllt. Die erste Schicht bildet im Wesentlichen eine Füllschicht für die dreidimensionale Stützstruktur. Die Angabe "zu einem größeren Teil" soll sich auf die Masse der ersten Schicht beziehen, d.h pro Fläche des Filterelements ist der Teil der ersten Schicht (bezogen auf ihre Masse), der Hohlräume der Stützstruktur ausfüllt, größer als der Teil der ersten Schicht, der außerhalb von Hohlräumen auf die dreidimensionale Stützstruktur aufgetragen ist. Die erste Schicht füllt insbesondere zu mindestens 30 % ihrer Masse Hohlräume der dreidimensionalen Stützstruktur aus, insbesondere zu mindestens 65 %, insbesondere zur mindestens 75 %, insbesondere zu mindestens 85 %, insbesondere zu mindestens 95 %. Die erste Schicht sorgt auf diese Weise für eine gute Verankerung der Oberflächenfiltrationsschicht in der dreidimensionalen Stützstruktur und damit am Filterkörper. Trotz der guten Verankerung kann diese Füllung der dreidimensionalen Stützstruktur mit dem Material der ersten Schicht sehr porös sein, so dass der Strömungswiderstand beim Durchströmen des Filterelements in akzeptablen Grenzen bleibt.

Die Oberflächenfiltrationsschicht kann mindestens eine zweite Schicht aufweisen, die von der Zuströmseite her an der ersten Schicht aufgebracht ist. Dies kann beispielsweise in einer solchen Weise geschehen, dass die zweite Schicht eine Oberfläche an der Zuströmseite des Filterkörpers ausbildet. Es ist aber auch denkbar, dass neben der zweiten Schicht auch die erste Schicht, und in manchen Fällen sogar noch die dreidimensionale Stützstruktur selbst, zur Bildung der Oberfläche an der Zuströmseite des Filterkörpers beiträgt. Die erste Schicht kann als Grundlage für die mindestens zweite Schicht angesehen werden. Mit der mindestens zweiten Schicht lässt sich einfach einstellen, welche Fremdstoffe aus dem Gasstrom vor Eintritt in den Filterkörper herausgefiltert werden sollen, insbesondere welche Fremdstoffe mit einer entsprechenden Größe. Gegebenenfalls kann die mindestens zweite Schicht auch mehrere Schichten übereinander aufweisen, wobei diejenige Schicht die Oberfläche an der Zuströmseite des Filterkörpers ausbildet, die in Strömungsrichtung des Gasstroms im Filterbetrieb als erstes vom Gasstrom durchströmt wird. Die zweite Schicht bildet dabei größtenteils die eigentliche Oberflächenfiltrationsschicht, ggf. gemeinsam mit der ersten Schicht. In weiteren Ausführungsformen kann die zweite Schicht zusammen mit Teilen der ersten Schicht und sogar Teilen der dreidimensionalen Stützstruktur die Oberfläche an der Zuströmseite des Filterkörpers ausbilden

Die erste Schicht und die zweite Schicht können unterschiedliche Porengrößen aufweisen. Dabei kann die Porengröße der ersten Schicht größer sein als die Porengröße der zweiten Schicht. Dies reduziert den Druckverlust der Gasströmung durch das Filterelement, weil nur eine vergleichsweise geringe Dicke der Oberflächenfiltrationsschicht an der Zuströmseite eine sehr geringe Porosität aufweisen muss. Diese Dicke mit geringer Porosität ist hauptsächlich bestimmt durch die zweite Schicht, ggf. in Zusammenwirkung mit der ersten Schicht und/der der dreidimensionalen Stützstruktur. Die Porosität der dreidimensionalen Stützstruktur kann sehr groß sein, ohne deren Stabilität zu beeinträchtigen. Hier können die Vorteile additiver Herstellungsverfahren optimal ausgenutzt werden. Die erste Schicht kann aus relative grobkörnigem Material gebildet sein, so dass auch in mit Material der ersten Schicht gefülltem Zustand der dreidimensionalen Stützstruktur der Strömungswiderstand gering bleibt und sich kein signifikanter Druckverlust für die Gasströmung bei Durchströmen des Filterelements ergibt. Der Strömungswiderstand wird dann im Wesentlichen durch den Teil der Oberflächenfiltrationsschicht bestimmt, in dem sich das zweite Material befindet. Die Dicke dieses Teils kann sehr gering gewählt werden, so dass sich insgesamt ein nur geringer Strömungswiderstand ergibt.

Eine solche Konfiguration ermöglicht zudem eine leichte Reinigung des Filterelements, da sich ein Großteil der Fremdstoffe auf einer Oberfläche der Oberflächenfiltrationsschicht ansammeln wird und nicht bis in tiefere Lagen des Filterelements, bezogen auf die Strömungsrichtung des Gasstroms, eindringen kann. Nach einer erfolgten Abreinigung des Filterelements kann somit die Filterqualität des Filterelements in kurzer Zeit verbessert werden.

Die Oberflächenfiltrationsschicht kann so ausgebildet sein, dass die erste Schicht und die zweite Schicht einen Übergangsbereich zwischen sich bilden, in dem Material der zweiten Schicht in Zwischenräume zwischen Partikeln der ersten Schicht eindringt und diese wenigstens teilweise füllt. Dadurch ergibt sich insbesondere ein fester Zusammenhalt zwischen der ersten Schicht und der zweiten Schicht der Oberflächenfiltrationsschicht.

Die Oberflächenfiltrationsschicht kann eine Oberfläche des Filterkörpers ausbilden, wobei die Oberfläche von der ersten Schicht und der zweiten Schicht ausgebildet ist, in manchen Ausführungsformen sogar unter Mitwirkung der dreidimensionalen Stützstruktur. Dies erlaubt eine effektive Abreinigung des Filterkörpers, denn die Fremdstoffe verbleiben auf der Oberfläche des Filterkörpers.

Die mindestens zweite Schicht kann auf der Zuströmseite eine Oberfläche ausbilden, die auf der ersten Schicht haftet oder über höchstens 50 % der Dicke der Stützstruktur hinweg Hohlräume der ersten Schicht und der dreidimensionalen Stützstruktur ausfüllt, insbesondere höchstens 25 % der Dicke, insbesondere höchstens 5 % der Dicke, insbesondere höchstens 1 % der Dicke.

Die Porengröße der dreidimensionalen Stützstruktur kann insbesondere zwischen 100 µm und 2000 µm betragen. Die Porengröße der zweiten Schicht der Oberflächenfiltrationsschicht kann insbesondere zwischen 0,1 µm bis 20 µm betragen und die Porengröße der ersten Schicht der Oberflächenfiltrationsschicht kann insbesondere zwischen 1 µm und 200 µm betragen. Die Porengröße beschreibt hierbei einen gemittelten Porendurchmesser, der sich an einer Oberfläche der entsprechen Schicht bzw. Struktur einstellt, wenn die erste Schicht bzw. die zweite Schicht aus einem körnigen Material aufgebaut sind, wobei sich zwischen dem körnigen Material Poren ausbilden. Die Porengröße kann insbesondere mit einem Porenmessgerät überprüft und gemessen werden. Wenn hier oder im Folgenden von "Poren" oder "Porengröße" die Rede ist, so ist dieser Begriff allgemein zu verstehen und soll jede Art von Poren, Öffnungen, Hohlräumen, offenen Mikrostrukturen oder anderen Strukturen umfassen, bei denen das Gefüge eines ansonsten massiven Körpers derart strukturiert ist, dass sich eine Durchlässigkeit für Fluid ergibt. Beispielsweise können bei einigen additiven Fertigungsprozessen durch gezielte Auswahl und Festlegung von "Voxeln" (Voxel bedeutet ein elementares Volumenelement bei diskreter Unterteilung eines dreidimensionalen Raums in elementare Volumenelemente zur Adressierung des dreidimensionalen Raumes, analog zu "Pixeln" bei zweidimensionalen Objekten) ganz gezielt offene Mikrostrukturen erzeugt werden, die für das so erzeugte Objekt (Filterelement, Filterkörper, Oberflächenfiltrationsschicht, insbesondere dreidimensionale Stützstruktur) dieselbe Funktion bereitstellen wie Poren im herkömmlichen Sinn bei herkömmlich hergestellten gesinterten porösen Körpern.

Die Porengröße kann zum Beispiel mit einem Kapillarflow-Porometer PSM 165 von TOPAS gemessen werden. Die Funktionsweise der Messung ist im Folgenden beschrieben. Wird ein Medium von einem Fluid durchströmt, kommt es zu einem Druckverlust, der wesentlich durch die Porengrößenverteilung beeinflusst wird. Der Widerstand gegen die Durchströmung kann nur durch einen Durchströmversuch ermittelt werden. Der Zusammenhang von wirksamer Druckdifferenz und dadurch hervorgerufenem Volumenstrom wird dabei gemessen. Neben anderen Verfahren, wie mikroskopische Aufnahmen mit entsprechender Auswertung, lassen sich auch die Porengrößen durch Druckbeaufschlagung und Messung von Volumenströmen ermitteln. Das Wirkprinzip dieser Messung besteht darin, dass flüssigkeitsgefüllte Poren erst bei einem bestimmten Druck für Gas permeabel werden, da die Flüssigkeit aus der Pore verdrängt werden muss. Der Öffnungsdruck (Bubble Point) für eine Pore hängt von der Oberflächenspannung der Flüssigkeit und vom Porendurchmesser ab. Kleinere Poren erfordern einen höheren Druck. Da in realen Materialien immer eine Porengrößenverteilung vorhanden ist, entspricht der Druck, bei dem die vorher flüssigkeitsgefüllte Probe gasdurchlässig wird, dem Öffnungsdruck der größten Pore. Bei weiterer Druckerhöhung kann aus dem Verlauf von Druckdifferenz und Volumenstrom auf die Verteilung des Porendurchmessers geschlossen werden.

Jedenfalls kann die zweite Schicht PE, PTFE, SiO₂, z.B. Mikroglas, Hohlglas, Schaumglas, Vollglas oder Sand, PPS, Aluminiumoxid oder eine Mischung aus wenigstens zwei der genannten Materialien enthalten. Insbesondere kann jedenfalls die zweite Schicht die genannten Materialien in Partikelform enthalten. Dies ermöglicht eine gute Abreinigung der Oberflächenfiltrationsschicht. Außerdem kann die Oberflächenfiltrationsschicht auch eine keimtötende Wirkung haben.

Die Oberflächenfiltrationsschicht kann wenigstens teilweise, jedenfalls aber die erste und die zweite Schicht, als Beschichtung ausgebildet sein, insbesondere mittels Flüssigkeitsabscheidung, Aufsprühen, Aufbürsten, Tauchbeschichten, Einbrennen und/oder eines thermischen Spritzverfahrens wie zum Beispiel Flammspritzen. Dies ermöglicht eine gleichmäßige Oberflächenfiltrationsschicht, die geeignet ist, gute Filterleistungen zu ermöglichen. Eine Beschichtung ist dabei schnell und mit einfachen Mitteln herzustellen. Ferner ermöglicht dies den Einsatz bereits bewährter Verfahren zum Anbringen bzw. Auftragen der Oberflächenfiltrationsschicht auf den Filterkörper. Generell wird der Füllgrad von Hohlräumen der dreidimensionalen Stützstruktur mit Material der Oberflächenfiltrationsschicht (insbesondere mit Material der ersten Schicht) bei Beschichtungen, die aus Beschichtungsverfahren auf Basis von Flüssigkeiten oder Suspensionen resultieren, höher sein als bei Beschichtungen, die Resultat von thermischen Spritzverfahren wie Flammspritzen oder auch Sprühverfahren sind. Der Grund hierfür liegt darin, dass bei letzteren Verfahren die für die Bildung der Oberflächenfiltrationsschicht in Frage stehenden Materialien in der Lage sind, Brücken zwischen Partikeln, die in verschiedenen Hohlräumen der dreidimensionalen Stützstruktur aufgenommen sind, zu bilden. Dadurch ergibt sich eine gute Verankerung des Materials der ersten Schicht, auch schon bei relativ geringen Füllgraden von etwa 30 % des Volumens der Hohlräume in der dreidimensionalen Stützstruktur

Die dreidimensionale Stützstruktur kann eine fachwerkartige Konfiguration mit Stäben aufweisen, die an Knoten miteinander verbunden sind. Als fachwerkartige Konfiguration ist zu verstehen, dass mehrere Stäbe über Knoten miteinander verbunden sind, und so die dreidimensionale Stützstruktur eine Eigenstabilität hat und ohne zusätzliche Strukturen bestehen kann. Vorteil der fachwerkartigen Konstruktion ist neben der guten Eigenstabilität bei hoher Porosität auch, dass gebildete Hohlräume eine annähernd gleichmäßige Verteilung in der dreidimensionalen Stützstruktur aufweisen können. Dies erlaubt eine effiziente Herstellung einer haltbaren Oberflächenfiltrationsschicht. Fachwerkskonstruktionen besitzen bezogen auf ihre Tragfähigkeit ein geringes Eigengewicht. Die dreidimensionale Stützstruktur kann beispielsweise auch mittels periodischer Minimalflächen, insbesondere mittels dreifach periodischer Minimalverfahren, erzeugt werden. Ganz allgemein kann die dreidimensionale Stützstruktur auch aus osteogenen bzw. porösen Strukturen gebildet sein. Der zur Durchströmung von Fluid zur Verfügung stehende Raum kann besonders groß sein.

Die dreidimensionale Stützstruktur kann eine gitterartige Struktur aufweisen, die mindestens zwei Gitterlagen bildet, von denen die eine Gitterlage der Zuströmseite zugewandt ist, insbesondere die Zuströmseite definiert, und die andere Gitterlage der Abströmseite zugewandt ist. Dabei können die Gitterlagen durch Stäbe oder Stege miteinander verbunden sein. Die beiden Gitterlagen liegen in Strömungsrichtung des Gasstroms beim Durchtritt durch das Filterelement hintereinander. Die der Zuströmseite zugewandte Gitterlage kann in dem Sinne die Zuströmseite definieren, dass außer der ersten und ggf. zweiten Schicht der Oberflächenfiltrationsschicht keine weiteren Strukturen ausgebildet sind und somit die Lage der Filteroberfläche durch die Zuströmseite der dreidimensionalen Stützstruktur festgelegt ist. Die beiden Gitterlagen, und auch weitere Gitterlagen, falls vorhanden, können im Wesentlichen parallel zueinander ausgerichtet sein, wobei im Wesentlich parallel zueinander eine Neigung relativ zueinander um plus/minus 10° auch umfassen soll. Mit der gitterartigen Struktur lassen sich gleichmäßige Hohlräume, insbesondere in Bezug auf Form und Größe der Hohlräume, verwirklichen, die einfach und schnell mit der Oberflächenfiltrationsschicht, insbesondere dessen Partikel, befüllt werden können. Die Stäbe oder Stege, welche die wenigstens zwei Gitterlagen miteinander verbinden, verlaufen quer zur Zuströmseite und/oder Abströmseite, im Wesentlichen in Richtung der Gasströmung beim Durchtritt durch das Filterelement. Es können zwischen den beiden Gitterlagen noch weitere Gitterlagen vorgesehen sein. Besonders günstig ist eine Konfiguration der dreidimensionalen Stützstruktur mit insgesamt drei Gitterlagen. Dann befindet sich zwischen der einen Gitterlage, die die Zuströmseite definiert, und der anderen Gitterlage, die der Abströmseite zugewandt ist, eine weitere Gitterlage. Die Oberflächenfiltrationsschicht füllt einen zwischen den zwei Gitterlagen angeordneten Zwischenraum wenigstens zum Teil aus. Hierdurch ist es möglich, die Oberflächenfiltrationsschicht fest und haltbar mit der Stützstruktur zu verbinden.

Die eine und/oder die andere Gitterlage können eine Konfiguration aufweisen mit Stäben, die an Knoten miteinander verbunden sind und Öffnungen definieren. Diese Konfiguration definiert eine Gitterstruktur, wobei eine Mehrzahl von mindestens drei benachbarten Stäben, insbesondere vier benachbarten Stäben einer jeweiligen Gitterlage je eine Öffnung der Gitterlage umgeben. Es sind auch Anordnungen mit Öffnungen denkbar, die durch ein Polygon höherer Ordnung definiert sind. Dann umgeben eine Mehrzahl von n benachbarten Stäben einer jeweiligen Gitterlage je eine Öffnung der Gitterlage.

Die eine und/oder die andere Gitterlage kann eine regelmäßige Gitterstruktur aufweisen. Unter einer "regelmäßigen Gitterstruktur" soll verstanden werden, dass die Anordnung von Öffnungen und Stäben der jeweiligen Gitterlage ein regelmäßiges Muster mit sich wiederholenden Konfigurationen von Stäben zueinander und/oder Öffnungen aufweist. Insbesondere definiert dann die Konfiguration von Stäben einer jeweiligen Gitterlage regelmäßige Öffnungen. Beispielsweise können alle Öffnungen einer Gitterlage dieselbe Größe und/oder dieselbe Form aufweisen. Es können auch größere erste Öffnungen vorgesehen sein und kleinere zweite, dritte usw. Öffnungen, wobei die Anordnung der ersten, zweiten, dritten usw. Öffnungen ein regelmäßiges Muster definiert. Der Vorteil der regelmäßigen Gitterstruktur ist zum einen die Stabilität und dass die Öffnungen eine annähernd gleichmäßige Verteilung in der regelmäßigen Gitterstruktur aufweisen. Dies erlaubt eine effiziente Herstellung einer haltbaren Oberflächenfiltrationsschicht.

Die wenigstens zwei Gitterlagen können so angeordnet sein, dass die Öffnungen der einen der beiden Gitterlagen versetzt zu den Öffnungen der anderen der beiden Gitterlagen angeordnet sind. Dies erlaubt eine effiziente Befüllung der Hohlräume mit der Oberflächenfiltrationsschicht, insbesondere mit den Partikeln der Oberflächenfiltrationsschicht.

Die dreidimensionale Stützstruktur kann drei in Strömungsrichtung zwischen Zuströmseite und Abströmseite des Filterkörpers hintereinander liegende Gitterlagen aufweisen. Die Öffnungen der mittleren Gitterlage können dabei versetzt zu Öffnungen der beiden anderen Gitterlagen angeordnet sein. Die Gitterlagen haben insbesondere jeweils gleiche Konfiguration von Stäben und Öffnungen. Dies erlaubt eine effiziente Befüllung der Hohlräume mit der Oberflächenfiltrationsschicht, insbesondere mit den Partikeln der Oberflächenfiltrationsschicht.

Die dreidimensionale Stützstruktur kann drei in Strömungsrichtung zwischen Zuströmseite und Abströmseite des Filterkörpers hintereinander liegende Gitterlagen aufweisen. Die Öffnungen der beiden äußeren Gitterlagen können deckungsgleich zueinander angeordnet sein. Die Gitterlagen können insbesondere jeweils gleiche Konfigurationen von Stäben und Öffnungen haben. Deckungsgleich soll dabei als deckungsgleich in Bezug auf die Strömungsrichtung des Gasstroms im Filterbetrieb verstanden werden.

Die Öffnungen der einen, der anderen und/oder der mittleren Gitterlage können dreieckig, viereckig, insbesondere quadratisch, rechteckig, rautenförmig oder parallelogrammförmig, vieleckig, rund und/oder elliptisch ausgebildet sein.

Die Stege oder Stäbe, die je zwei benachbarte Gitterlagen miteinander verbinden, können versetzt zu den Knoten der beiden Gitterlagen angeordnet sein. Sie können insbesondere in der Mitte zwischen zwei benachbarten Knoten geordnet sein. Das bedeutet, dass die Stege oder Stäbe, die zwei benachbarte Gitterlagen verbinden, an beiden Gitterlagen in einem Abschnitt, insbesondere in der Mitte, zwischen zwei Knoten ansetzen. Auf diese Weise entstehen zwischen den beiden benachbarten Gitterlagen jeweils Käfigstrukturen, die gut zum Festhalten von Partikeln der Oberflächenfiltrationsschicht, insbesondere von Partikeln der ersten Schich und insbesondere gegenüber Bewegung in Richtung quer zur Ebene der Gitterlagen, geeignet sind. Die Käfigstrukturen haben dabei selbst möglichst geringe Oberflächen um den Gasstrom nicht zu behindern. Eine solche Anordnung ist beispielsweise günstig, wenn die beiden Gitterlagen derart versetzt sind, dass die Knoten der einen Gitterlage zentriert zur Mitte der Öffnungen der anderen Gitterlage angeordnet sind. Dann liegen bei orthogonaler Projektion die Knoten der einen Gitterlage auf dem Mittelpunkt der Öffnungen der anderen Gitterlage. In diesem Fall können die Stege oder Stäbe, die die beiden Gitterlagen miteinander verbinden, ebenfalls orthogonal zu den beiden Gitterebenen verlaufen und jeweils in der Mitte von Stäben oder Stegen ansetzen, die in der Ebene einer jeweiligen Gitterlage liegen und benachbarte Knoten der jeweiligen Gitterlage verbinden.

Es ist auch denkbar, dass Stege oder Stäbe, die je zwei benachbarte Gitterlagen miteinander verbinden, an den Knoten der einen Gitterlage und versetzt zu den Knoten der jeweils anderen Gitterlage angeordnet sind. Das bedeutet, dass die Stege oder Stäbe an den Knoten der einen Gitterlage ansetzten, aber in einem Abschnitt zwischen zwei Knoten der jeweils anderen Gitterlage enden. Beispielsweise können die Stege oder Stäbe an den Knoten der der an der Zuströmseite liegenden Gitterlage ansetzen, aber in einem Abschnitt zwischen zwei Knoten der mittleren Gitterlage enden. Gleichermaßen können die Stege oder Stäbe an den Knoten der der an der Abströmseite liegenden Gitterlage ansetzen, aber in einem Abschnitt zwischen zwei Knoten der mittleren Gitterlage enden. Auch auf diese Weise entstehen zwischen den beiden benachbarten Gitterlagen jeweils Käfigstrukturen, die gut zum Festhalten von Partikeln der Oberflächenfiltrationsschicht, insbesondere von Partikeln der ersten Schicht, geeignet sind.

Der Begriff Gitterlage beschreibt insbesondere eine Lage, die mehrere zueinander parallel orientierte Stege oder Stäbe aufweist, die in eine erste Richtung verlaufen, und mehrere andere zueinander parallel orientierte Stege oder Stäbe aufweist, die in eine zweite Richtung verlaufen. Die erste Richtung und die zweite Richtung stehen in einem Winkel relativ zueinander, insbesondere in einem Winkel von 90°. Die Stege oder Stäbe bilden somit gemeinsam ein Gitter oder ein Netz. Der Abschnitt, an dem sich ein in die erste Richtung verlaufender Steg oder Stab mit einem in die zweite Richtung verlaufenden Steg oder Stab kreuzt, bildet einen Knoten. Zwischen zwei Knoten befindet sich dann ein Abschnitt, an dem der entsprechende Steg oder Stab ohne Unterbrechung verläuft.

Mindestens zwei Gitterlagen definieren eine Porenstruktur. Die Porenstruktur weist insbesondere eine Porengröße zwischen 1 µm und 10000 µm, insbesondere zwischen 100 µm und 2000 µm auf. Die Porengröße gibt den maximalen Durchmesser eines insbesondere runden Partikels an, der gerade noch in die Pore aufgenommen werden kann. Die beiden Gitterlagen schaffen parametrische Poren, d.h. Poren, die durch die Anordnung der wenigstens zwei Gitterlagen zueinander ausgebildet werden. Die Poren der Gitterlagen sind somit nicht zufällig angeordnet sondern parametrisch gesteuert. Es besteht die Möglichkeit, dass einen absichtliche Zufälligkeit der Poren, zum Beispiel mit Hilfe eines Randomizers, bewirkt wird, so dass auch die so ausgebildeten Poren, die anscheinend zufällig ausgebildet sind, parametrisch angelegt sind. Dies ist dann vorteilhaft, wenn Druckverfahren verwendet werden, die besser mit einer unregelmäßigen Verteilung zurecht kommen. Zum Beispiel bei Stereolithographie, Particlejetting und Fused Deposition Modeling wird eine im CAD festgelegte Porenstruktur direkt im Material umgesetzt. Bei Verfahren die im Pulverbett arbeiten (Selektives Lasersintern, Selektives Laserstrahlschmelzen, Binderjetting) indem Pulver aufgeschmolzen oder verklebt wird, bietet es sich an, die Porenstruktur nicht als Vollmaterial zu zeichnen, sondern Laserpfade oder Klebepunkte im CAD anzulegen. In einem gewissen Parameterbereich gesteuerte Unregelmäßigkeiten erzeugen dann zusammen mit der unregelmäßigen Struktur der Korngrößen des Materials die tatsächlichen Poren des additiv gefertigten Grundkörpers. Die Stege welche die Poren festlegen, können auf diese Weise selbst auch porös sein.

Der Filterkörper kann weiterhin eine dreidimensionale Grundstruktur aufweisen, die im Folgenden auch als "Mutterporenstruktur" bezeichnet wird. Die dreidimensionale Stützstruktur ist an einer Zuströmseite der Mutterporenstruktur angeordnet. Die Mutterporenstruktur weist eine sich von der dreidimensionalen Stützstruktur unterscheidende Struktur auf, wobei die Mutterporenstruktur insbesondere größere Öffnungen oder Poren aufweist, als die dreidimensionale Stützstruktur. Die Oberflächenfiltrationsschicht befindet sich auf der von der Mutterporenstruktur abgewandten Seite der dreidimensionalen Stützstruktur. Die Mutterporenstruktur verleiht dem Filterelement zusätzliche Stabilität. Die Mutterporenstruktur erlaubt des Weiteren eine Beruhigung des Gasstroms, der durch die Stützstruktur verwirbelt wurde, bevor dieser das Filterelement verlässt.

Die dreidimensionale Mutterporenstruktur kann eine größere Porengröße aufweisen als die dreidimensionale Stützstruktur. Der Filterkörper kann als Hauptbestandteil, insbesondere für die dreidimensionale Stützstruktur und ggf. die Mutterporenstruktur, ein UV-vernetzendes duroplastisches Polymermaterial aufweisen. Der Hauptbestandteil kann Polyethylen, Polysulfon oder Polyphenylensulfid, Polyamide, z.B. Nylon beim Lasersintern, oder Polyactide oder Gemische dieser Materialien umfassen.

Die Mutterporenstruktur und die dreidimensionale Stützstruktur können in einem additiven Fertigungsprozess, insbesondere in einem 3D-Druckprozess, hergestellt werden. Beide Strukturen können insbesondere in demselben additiven Fertigungsprozess hergestellt werden. Dies erlaubt eine schnelle Herstellung des Filterkörpers und damit des Filterelements.

Sowohl die Mutterporenstruktur als auch die dreidimensionale Stützstruktur können aus einem festen Material oder aus einem porösen Material ausgebildet sein.

Die Mutterporenstruktur lässt sich beispielsweise dadurch von der dreidimensionalen Stützstruktur unterscheiden, dass die Mutterporenstruktur die Kontur des Filterkörpers aufbaut und/oder definiert, wohingegen die dreidimensionale Stützstruktur dieser Kontur des Filterkörpers folgt und eine Verbindung zu der Oberflächenfiltrationsschicht herstellt..

Es sei ferner darauf hingewiesen, dass man die Mutterporenstruktur auch ohne ein additives Fertigungsverfahren herstellen könnte, falls gewünscht. Dann würden allerdings die durch additive Fertigungsverfahren erzielbaren Vorteile nicht genutzt.

Der Filterkörper kann weiterhin eine dreidimensionale Tragstruktur aufweisen, die dazu ausgebildet ist, am Filterkörper zusätzliche Bauteile, wie zum Beispiel einen Filterelementkopf oder einen Filterelementfuß auszubilden oder solche zusätzlichen Bauteile am Filterkörper zu befestigten. Eine solche dreidimensionale Tragstruktur kann auch die Mutterporenstruktur ausbilden bzw. kann die Mutterporenstruktur eine solche dreidimensionale Tragstruktur ausbilden.

Der Filterkörper kann wenigstens einen von dem Hauptbestandteil verschiedenen Zusatzbestandteil aufweisen, wobei der Zusatzbestandteil insbesondere Fasern, insbesondere Stapelfasern, oder ein gefüllter Kunststoff ist. Der Zusatzbestandteil kann wenigstens eine der folgenden Eigenschaften besitzen: antistatische Eigenschaften, leitfähige Eigenschaften, antibakterielle Eigenschaften, fungizide Eigenschaften, flammhemmende Eigenschaften.

Das Filterelement kann als Hohlkörper ausgebildet sein, wobei die Zuströmseite des Filterkörpers auf einer Außenseite des Hohlkörpers liegt und die Abströmseite des Filterkörpers auf einer Innenseite des Hohlkörpers liegt. Das Filterelement kann in einem Querschnitt durch den Filterkörper zylindrisch, tannenbaumartig, lamellenförmig oder polygonartig ausgebildet sein. Derartige Querschnitte sind gut geeignet, um eine möglichst große Oberfläche auf der Zuströmseite des Filterkörpers zu bilden und dabei dennoch dem Filterelement genügend Eigenstabilität zu verleihen.

Das Filterelement kann ferner eine kastenartige Form aufweisen, insbesondere eine längliche kastenartige Form. Der Kasten kann zwei einander gegenüber liegende breite Seitenwände haben, durch die jeweils durch eine Längsseite und eine Breitseite des Kastens gebildet sind. An Stirnseiten des Kastens verbinden zwei schmale in Tiefenrichtung verlaufende Wände die beiden breiten Seitenwände. Länglich bedeutet, dass eine Erstreckung des Filterelements in Längsrichtung deutlich größer ist als in Breitenrichtung. In jedem Fall ist eine Erstreckung des Kastens in Tiefenrichtung deutlich kleiner als in Längsrichtung und in Breitenrichtung.

Das Filterelement kann ferner einen Filterkopf und/oder einen Filterfuß aufweisen, um den hohl ausgebildeten Filterkörper an einem offenen Ende zu verschließen. Insbesondere kann der Filterfuß und/oder der Filterkopf derart ausgebildet sein, dass er die Eigenstabilität des Filterelements verbessert. Das Filterelement kann beispielsweise an dem Filterkopf und/oder dem Filterfuß gehalten bzw. abgestützt sein.

Hierbei ist insbesondere eine Anordnung denkbar, bei der der Filterkopf an einem ersten Ende des Filterelements angeordnet ist und der Filterfuß an einem dem ersten Ende gegenüberliegenden zweiten Ende des Filterelements angeordnet ist.

Der Filterkopf und/oder der Filterfuß kann insbesondere integral bzw. einstückig mit dem Grundkörper ausgebildet sein. Damit soll insbesondere ausgedrückt werden, dass der Filterkopf und/oder der Filterfuß in demselben additiven Verfahren ausgebildet wird wie der Grundkörper. Eine derart integrale Bauweise kann die Stabilität des gesamten Filterelements erhöhen, indem Verbindungsstellen, welche in der Regel die Schwachstellen darstellen, vermieden werden. Zusätzlich können Prozessschritte, ein eventuelles Umrüsten etc. bei der Herstellung vermieden werden. Der Filterkopf und/oder der Filterfuß kann aus demselben Polymermaterial gebildet sein wie der Filterkörper. Allerdings wird der Filterkopf und/oder der Filterfuß in der Regel nicht porös sein. Selbstverständlich kann auch der Filterkopf bzw. Filterfuß aus einem jeweils speziell angepassten Polymermaterial gebildet sein.

Der Filterkörper und gegebenenfalls die Oberflächenfiltrationsschicht können als einen Hauptbestandteil ein thermoplastisches Polymermaterial aufweisen, insbesondere Polyethylen (PE), Polypropylen (PP), Polyphenylensulfid (PPS), Polyimid (PI), Polyamid (PA), Polyvinylalkohol (PVA), Polyactide (PLA) oder ein thermoplastisches Mischpolymer auf Basis derselben. Der Hauptbestandteil wird in der Regel einen größeren Anteil an der Gesamtzusammensetzung besitzen als ein Zusatzbestandteil, wobei der Filterkörper und gegebenenfalls die Oberflächenfiltrationsschicht durchaus mehrere Hauptbestandteile aufweisen kann bzw. der Hauptbestandteil ein Mischpolymer sein kann. Die Zugabe von Polyvinylalkohol kann gezielt zur Erzeugung von Porenstrukturen ausgenutzt werden, da viele Polyvinylalkohole gut wasserlöslich sind und somit durch Einlagern von Polyvinylalkohol in das Material des Filterkörpers bzw. der Oberflächenfiltrationsschicht und späteres Behandeln mit Wasser Hohlräume gebildet werden können. Auch eine Zugabe von Wasser ermöglicht die gezielte Erzeugung von Porenstrukturen. Mit dieser Vorgehensweise lässt sich die Porenstruktur, insbesondere die Porengröße, gut einstellen.

Der Filterkörper und gegebenenfalls die Oberflächenfiltrationsschicht kann als einen Hauptbestandteil auch ein duroplastisches Polymermaterial aufweisen, insbesondere ein Epoxidharz, Phenolharz, Polyesterharz, Melaminharz, Silikonharz, Urethanharz oder ein Mischpolymer auf Basis derselben. Insbesondere können Polymermaterialien, die sich für die Stereolithographie oder das Lasersintern eignen, eingesetzt werden.

Bei einem duroplastischen Polymaterial als Hauptbestandteil ist es insbesondere denkbar, dass der Filterkörper bzw. die Oberflächenfiltrationsschicht als einen Hauptbestandteil ein UV-vernetzendes duroplastisches Polymermaterial, beispielsweise Epoxyacrylat, aufweist. Alternativ sind durch Wärme vernetzende und/oder in feuchter Umgebung vernetzende Polymermaterialien denkbar.

Der Filterkörper und gegebenenfalls die Oberflächenfiltrationsschicht kann zusätzlich zu einem oder mehreren Hauptbestandteilen ferner zumindest einen von dem Hauptbestandteil verschiedenen Zusatzbestandteil aufweisen.

Als Zusatzbestandteil kommen Fasern in Frage, insbesondere Stapel- oder Kurzfasern. Die Fasern können zur Festigkeitssteigerung dienen, und können bspw. insbesondere als Glasfasern, Keramikfasern, oder Kunststofffasern wie Aramid, ausgebildet sein. Die Fasern können beispielsweise Carbonfasern sein. Auch Naturfasern kommen in Frage. Auch Mischungen solcher Fasern sowie der Einsatz sogenannter gefüllter Kunststoffe (Kunststoffcompounds) kommen in Frage.

Gefüllte Kunststoffe oder Compounds sind aufbereitete Kunststoffe, denen unter bestimmten Verfahren sogenannte Zuschlagstoffe (Füllstoffe, Additive, Fasern usw.) beigemischt wurden, um deren Eigenschaften gezielt anpassen zu können.

Das Filterelement (Filterkörper und gegebenenfalls Oberflächenfiltrationsschicht) kann auch einen Zusatzbestandteil mit antistatischen Eigenschaften aufweisen. Ein Beispiel für einen solchen Zusatzbestandteil sind Rußpartikel.

Wieder weitere Ausführungsbeispiele können als einen Zusatzbestandteil leitfähige Partikel, z.B., aus Silber oder sogenannte dotierte Kunststoffpartikel, welche implementierte Elektronen besitzen, aufweisen.

Weitere mögliche Zusatzbestandteile können antibakterielle Eigenschaften besitzen. Hierfür sind bspw. Silber, Kupfer oder Titanoxid (TiO2) denkbar.

Wieder andere denkbare Zusatzbestandteile können fungizide Eigenschaften besitzen. Damit kann eine Pilzbildung an dem Filterkörper und/oder der Oberflächenfiltrationsschicht gehemmt werden. Ein solcher Zusatzbestandteil kann bspw. Kupfer sein.

Ferner hat es sich als vorteilhaft gezeigt, wenn der Zusatzbestandteil flammhemmende Eigenschaften besitzt. Dadurch kann die Brennbarkeit des Filterkörpers und gegebenenfalls der Oberflächenfiltrationsschicht reduziert werden. Dies ist insbesondere von Vorteil im Zusammenhang mit dem Filtern von brennbaren Stäuben. Ein solcher Bestandteil kann beispielsweise ein Kunststoff auf Basis von Polyoxymethylen (POM), Polysulfon (PSU) oder Polyphenylensulfid (PPS) sein. Auch Bestandteile auf Basis von Aluminiumtrihydrat (ATH), Magnesiumhydroxid, organischen bromierten Verbindungen oder Schichtsilikaten kommen in Frage.

Additive Herstellungsverfahren erlauben das Herstellen von fraktalen Oberflächenstrukturen. Hierdurch kann bei gegebenen Abmessungen des Filterelements die zur Filtration zur Verfügung stehende Oberfläche sehr effizient vergrößert werden. Es ist sogar möglich, die Oberfläche der Oberflächenfiltrationsschicht so auszubilden, dass ein Lotuseffekt entsteht, der das Abreinigen der Oberflächenfiltrationsschicht erleichtert.

Insbesondere kann das Filterelement einen Filterkörper aufweisen, der in einem auf Photopolymerisation beruhenden additiven Herstellungsverfahren hergestellt ist. Hierfür eignet sich ganz besonders ein Continuous Liquid Interface Production -Verfahren. Das "Continuous Liquid Interface Production"-Verfahren hat den Vorteil einer schnelleren Herstellungsgeschwindigkeit eines Bauteils gegenüber anderen 3D-Herstellungsverfahren, da das Bauteil kontinuierlich aus einer Polymerlösung gezogen wird, welche dabei an vorbestimmten Stellen ausgehärtet wird, im Gegensatz zu dem ausgeprägten schichtweisen Aufbau von anderen 3D-Herstellungsverfahren.

Auch andere additive Herstellungsverfahren eignen sich zur Herstellung der hier vorgeschlagenen Filterelemente. Beim selektiven Lasersintern (SLS) oder beim selektiven Laserschmelzen (SLM) werden räumliche Strukturen aus einem pulverförmigen Ausgangsstoff hergestellt durch gezieltes Bestrahlen mit einem Laser, so dass im jeweils bestrahlten Volumen ein im Wesentlichen punktförmiges Sintern des pulverförmigen Ausgangsstoffs erfolgt. Der Laser wird dabei über eine Schicht des pulverförmigen Ausgangsmaterials geführt und nur gezielt an solchen Stellen aktiviert, wo in der Schicht ein Sintern des pulverförmigen Ausgangsmaterials erfolgen soll. Der Filterkörper und ggf. die Oberflächenfiltrationsschicht wird so Schicht für Schicht aufgebaut. Durch die Wirkung der Laserstrahlen können beliebige dreidimensionale Geometrien, beispielsweise auch mit Hinterschneidungen, erzeugt werden, die sich in konventioneller Sinterfertigung nicht herstellen lassen. Auch die Porenstruktur lässt sich durch geeignete Einstellung des Laserstrahls gut steuern. Ein weiteres geeignetes additives Herstellungsverfahren ist das sogenannte Binder-Jetting, bei dem pulverförmiges Ausgangsmaterial an ausgewählten Stellen einer Schicht mit einem Binder verklebt wird, um so den Filterkörper und gegebenenfalls die Oberflächenfiltrationsschicht zu erzeugen. Üblicherweise wird beim Binder-Jet Verfahren eine Pulver- oder Granulatschicht auf einen höhenverstellbaren Tisch aufgebracht und mittels Binder an den Stellen der Schicht verklebt, die die Porenwände des Filterkörpers bzw. der Oberflächenfiltrationsschicht bilden sollen. Dazu wird ähnlich wie bei einem gewöhnlichen Tintenstrahldrucker ein Druckkopf verwendet, der statt Tinte den Binder aufbringt.

Die Erfindung wird nachfolgend anhand von Zeichnungen näher beschrieben, die Zeichnungen sind lediglich beispielhaft zu verstehen. Sie sind schematisch, nicht maßstabsgetreu, und zeigen jeweils nur die zum Verständnis der vorliegenden Erfindung wesentlichen Merkmale. Es versteht sich, dass weitere Merkmale, wie sie einem Fachmann geläufig sind, vorliegen können. In den Zeichnungen bezeichnen gleiche Bezugsziffern jeweils gleiche oder entsprechende Elemente. Es zeigen:
Figur 1 ein Ausführungsbeispiel eines erfindungsgemäßen Filterelements mit einem Filterkopf und einem Filterfuß;
Figur 2 einen zentralen Bereich eines Schnitts durch das Filterelement an der in Figur 1 mit II-II bezeichneten Position;
Figur 3 eine vergrößerte Schnittansicht der Schnittansicht aus Figur 2
Figur 4 eine vergrößerte perspektivische Darstellung der dreidimensionalen Stützstruktur des Ausführungsbeispiels aus Figur 2;
Figur 5 ein beispielhaftes Verfahren zum Herstellen des erfindungsgemäßen Filterelements;
Figur 6 eine schematische Darstellung eines beispielhaften Herstellungsverfahrens für ein erfindungsgemäßes Filterelement; und
Figur 7 eine schematische Darstellung eines anderen möglichen Herstellungsverfahrens für ein erfindungsgemäßes Filterelement.

Merkmale der einzelnen Ausführungsbeispiele können auch in anderen Ausführungsbeispielen realisiert werden, sofern diese technisch realisierbar sind. Sie sind also untereinander austauschbar, auch wenn darauf im Folgenden nicht jedes mal gesondert hingewiesen wird.

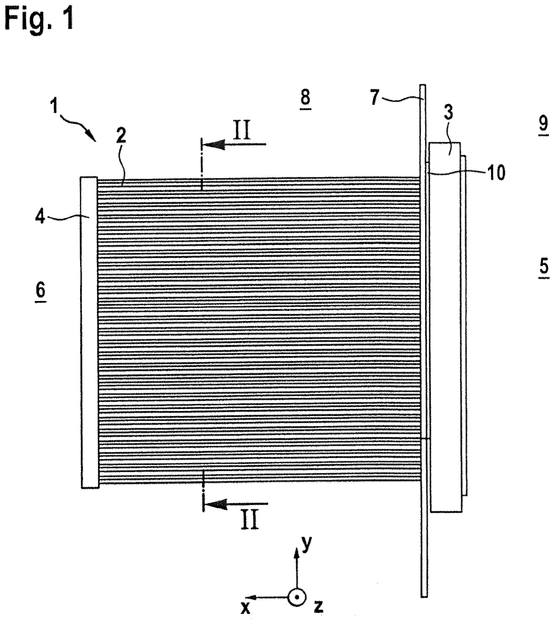

Figur 1 zeigt ein Filterelement 1 mit einem Filterkörper 2 aus Kunststoff. Der Filterkörper ist mittels eines additiven Herstellungsverfahrens aus einem Polymermaterial hergestellt. Das Filterelement 1 besitzt eine kastenartige Form, insbesondere die Form eines schmalen Kastens, dessen Erstreckung in Längsrichtung (in Figur 1, Richtung x) und Breitenrichtung (in Figur 1, Richtung y) deutlich größer ist als in einer Tiefenrichtung (in Figur 1, Richtung z). Insbesondere ist die Erstreckung des Filterelements in Längsrichtung und/oder in Breitenrichtung mindestens doppelt so groß oder sogar mindestens fünfmal so groß oder sogar mindestens zehnmal so groß wie in Tiefenrichtung. Das Filterelement kann in Längsrichtung x und in Breitenrichtung y in etwa gleiche Abmessungen haben. Falls gewünscht kann das Filterelement in der Breitenrichtung y auch etwas kleiner ausgebildet sein als in der Längsrichtung x, aber in jedem Fall ist die Erstreckung in Breitenrichtung y auch deutlich größer als die Erstreckung in Tiefenrichtung z.

Ferner weist das Filterelement 1 einen Filterkopf 3 sowie einen Filterfuß 4 auf, wobei der Filterkopf 3 an einem Ende auf einer ersten Seite 5 des Filterelements 1 angeordnet ist und der Filterfuß 4 an einem Ende auf einer der ersten Seite 5 gegenüberliegenden zweiten Seite 6 des Filterelements 1 angeordnet ist. Das in Figur 1 dargestellte Ausführungsbeispiel des Filterelements 1 ist an einer hochkant angeordneten Trennwand 7 gehalten, welche Teil einer weiter nicht gezeigten Filtervorrichtung ist, und trennt eine Zuströmseite 8 der Filtervorrichtung von einer Abströmseite 9. Die Zuströmseite 8, die auch als Rohgasseite bezeichnet werden kann, entspricht hierbei der Seite, an der ein mit Fremdstoffen beladener Gasstrom, das sogenannte Rohgas, auf das Filterelement 1 trifft, und die Abströmseite 9, die auch als Reingasseite bezeichnet werden kann, entspricht der Seite, auf der das von den Fremdstoffen gereinigte Gas, das sogenannte Reingas, ausströmt. Dementsprechend besitzt das Filterelement 1 eine Zuströmseite und eine Abströmseite.

Das Filterelement 1 ist mit seinem Filterkopf 3 an der hochkant angeordneten Trennwand 7 "seitlich" befestigt, erstreckt sich also von der Trennwand 7 in Richtung x. Figur 1 zeigt den sogenannten reinfluidseitigen Einbau des Filterelements 1, bei dem eine den Filterkörper 2 in y-Richtung beidseitig überragende Seitenfläche des Filterkopfes 3, die zum Filterfuß 4 hin weist, auf der Abströmseite 9 an der Trennwand 7 befestigt ist und der Filterkörper 2 des Filterelements 1 durch eine Öffnung in der Trennwand 7 hindurch ragt. Zwischen dem Filterkopf 3 und der Trennwand 7 ist eine Dichtung 10 zu erkennen, die zur Abdichtung zwischen der Zuströmseite 8 und der Abströmseite 9 dient. Dies erlaubt einen Austausch des Filterelements 1 von der "sauberen" Abströmseite 9 her. In dem hier gezeigten Ausführungsbeispiel verschließt der Filterfuß 4 das eine Ende des Filterkörpers 2, so dass das Reinfluid den Filterkörper 2 durch den Filterkopf 3 verlässt.

Alternativ ist auch der sogenannte rohgasseitige Einbau des Filterelements 1 denkbar, bei dem der Filterkopf 3 mit seiner dem Filterfuß 4 abgewandten Seitenfläche von der Zuströmseite 8 her an der Trennwand 7 befestigt ist. Der Ein- und Ausbau des Filterelements 1 erfolgt dann über die Zuströmseite 8.

Selbstverständlich ist es auch denkbar, das Filterelement 1 hängend zu befestigen statt seitlich. Die Trennwand 7 ist dann quer, vorzugsweise horizontal, in der Art eines Zwischenbodens in der Filtervorrichtung zwischen beispielsweise einer unten liegenden Zuströmseite 8 und einer oben liegenden Abströmseite 9 vorgesehen. Auch in dieser hängenden Einbauposition des Filterelements 1 kann entweder ein reingasseitiger oder ein rohgasseitiger Einbau des Filterelements 1 vorgesehen sein.

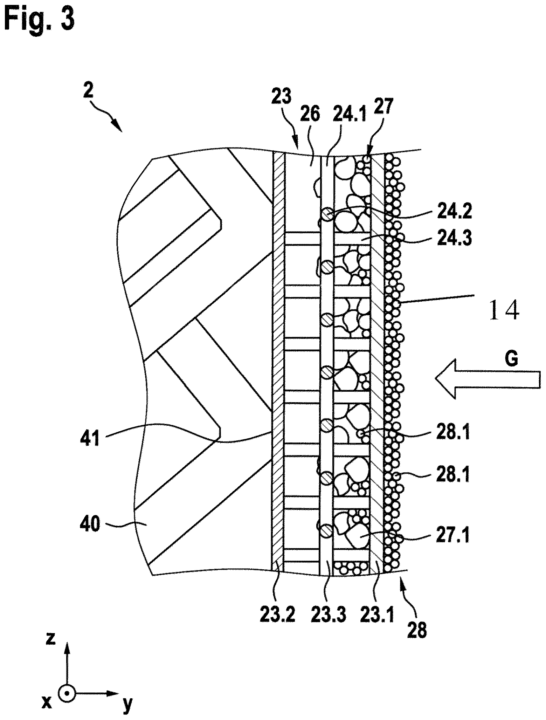

Der Filterkörper 2 besitzt ein poröses, insbesondere durchströmungsporöses Gefüge, welches auf unterschiedliche Weisen ausgebildet sein kann. Ein Ausführungsbeispiel ist in Figur 3 gezeigt. Unter einem durchströmungsporösen Gefüge ist ein solches Gefüge zu verstehen, welches einen zusammenhängenden, jedoch von der Zuströmseite 8 des Filterkörpers 2 zu der Abströmseite 9 des Filterkörpers 2 durchströmungsporösen Körper, d.h., für Durchtritt von Gas durchlässigen Körper (hier den Filterkörper 2), ausbildet.

Der Filterkörper 2 des erfindungsgemäßen Filterelements 1 ist ferner auch eigenstabil, das bedeutet, dass der Filterkörper 2 eine solche Festkörperstruktur ausbildet, dass er sein Eigengewicht selbst tragen kann, wenn er, beispielsweise wie in Figur 1 gezeigt, lediglich an einem Ende (Filterkopf) in seiner Längsrichtung gehalten ist, oder aber durch eine weitere Stützstruktur am Filterfuß an seinen beiden in Längsrichtung entfernten Enden gehalten ist. Das Filterelement 1 weist über den Filterkörper 2 hinaus aber keine weitere Skelett- oder Tragstruktur aus dem Material wie der Filterkörper 2 auf. In weiteren Ausführungsbeispielen kann das Filterelement zusätzliche Strukturen aufweisen, wie zum Beispiel eine Feder oder ein anderes Element, aufweisen, die in den Filterkörper 2 einschiebbar ist.

Solche Filterelemente 1 werden beispielsweise in großen Industrieanlagen zum Reinigen der Abgase eingesetzt und besitzen eine Länge von 1 cm bis 5 m, insbesondere 5 cm bis 3 m und eine Breite von 0,55 cm bis 200 cm, insbesondere von 1 cm bis 100 cm und eine Tiefe von 0,5 cm bis 50 cm, insbesondere 1 cm bis 25 cm. Die Filterelemente können eine zum Filtern nutzbare Querschnittsfläche gegenüber der Fluidströmung von 0.0015 m² bis zu 25 m² aufweisen. Die tatsächliche zur Oberflächenfiltration zur Verfügung stehende Fläche kann bei geeigneter Strukturierung der Oberflächenfiltrationsschicht mittels Vorsprüngen/Vertiefungen, Oberflächenrauigkeit, fraktalen Geometrien oder anders strukturierten Oberflächen noch sehr viel größer sein als diese Querschnittsfläche.

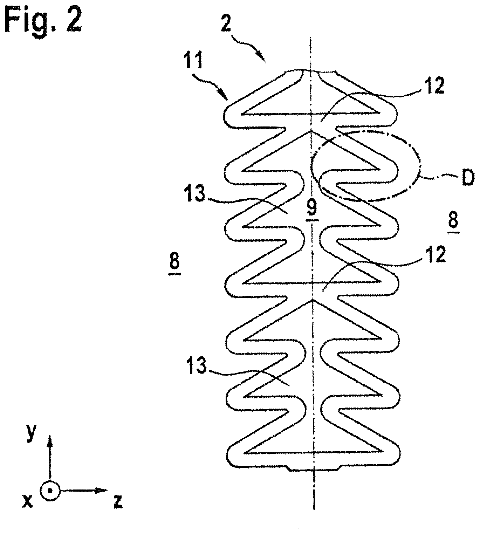

Figur 2 zeigt ein Querschnittsprofil des Filterkörpers 2 auf der Länge der Linie II-II in Figur 1 und an einem von den Rändern entfernten mittleren Bereich. Es ist zu erkennen, dass der Filterkörper 2 als ein Hohlkörper ausgebildet ist und in dem hier gezeigten Beispiel einen tannenbaumartigen Querschnitt 11 aufweist. Jedoch sind auch rund, zylindrisch oder polygonartig ausgebildete Querschnitte denkbar.

Die tannenbaumartige Gestaltung eignet sich insbesondere deshalb, da sie verglichen mit bspw. einem glatten quaderförmigen Querschnitt bei etwa vergleichbarem Volumen des Filterelements 1, eine größere Oberfläche bildet, die auf der Zuströmseite 8 (Außenseite) liegt und somit zur Filtration des dort ankommenden Rohgases wirksam ist. Im Innern des Hohlkörpers liegt die Abströmseite 9. Das gereinigte Gas strömt nach Durchtritt durch die den Filterkörper des Filterelements in etwa orthogonal zur Schnittebene zum Filterkopf.

Es ist zu erkennen, dass der tannenbaumartige Querschnitt 11 in bestimmten Abständen durchgängige Zwischenwände 12 besitzt, die den innenliegenden Hohlraum in mehrere kleinere Hohlkammern 13 unterteilen. Die Zwischenwände 12 dienen der Stabilität des Filterkörpers 2 und ihre Anzahl kann entsprechend der gewünschten Stabilität gewählt werden. Bei ausreichender Eigenstabilität des Filterkörpers 2 kann auch auf die Vorsehung von Zwischenwänden 12 verzichtet werden.

Zur Filtration der Fremdstoffe aus dem Rohgas, weist der Filterkörper 2 an seiner Zuströmseite 8 eine Oberflächenfiltrationsschicht 14 auf, wie sie beispielhaft und schematisch in Figur 3 gezeigt ist.

Die Oberflächenfiltrationsschicht 14 formt die Hauptfilterkomponente. Auszufilternde Fremdstoffe (Partikel) bleiben wegen der geringen Porengröße der Oberfläche der Oberflächenfiltrationsschicht hängen. Solches Material dringt gar nicht oder nur noch in sehr geringem Maße in den Filterkörper 2 ein, der hauptsächlich als von dem Reinfluid passierbare Trennkomponente zwischen der Rohgasseite (Zuströmseite 8) und der Reingasseite (Abströmseite 9) dient.

Die Oberflächenfiltrationsschicht 14 weist, wie auch schon der Filterkörper 2, eine poröse Struktur auf, und ist an der Zuströmseite 8 des Filterkörpers 2 oder teilweise in dem Filterkörper 2 zuströmseitig angeordnet. Die mittlere Porengröße in der Oberflächenfiltrationsschicht 14 ist deutlich kleiner als die mittlere Porengröße des Filterkörpers 2. Die mittlere Porengröße in der Oberflächenfiltrationsschicht 14 ist so zu wählen, dass die aus dem Rohgas zu filternden Fremdstoffe die Oberflächenfiltrationsschicht 14 nicht passieren können und sich an der zuströmseitig gelegenen Oberfläche derselben ablagern.

Der Filterkörper 2 kann in Bereichen außerhalb der Oberflächenfiltrationsschicht 14 eine mittlere Porengröße von etwa 100 µm bis 2000 µm besitzen, wohingegen der Filterkörper in Bereichen, in denen die Oberflächenfiltrationsschicht 14 ausgebildet ist, eine geringere mittlere Porengröße aufweist, in vielen Fällen in einem Bereich von 0,1 µm bis 200 µm.

Zumindest eine im Folgenden noch näher beschriebene dreidimensionale Stützstruktur 23, die für eine feste Anbindung der Oberflächenfiltrationsschicht 14 am Filterkörper 2 sorgt, ist additiv gefertigt. Es können aber auch weitere Bestandteile des Filterelements 1 additiv gefertigt sein, wie beispielsweise eine eine poröse Grundstruktur bildende Mutterporenstruktur 40, eine Tragstruktur für weitere Komponenten wie Filterkopf 3 und/oder Filterfuß 4, sowie der Filterkopf 3 und/oder der Filterfuß 4.

Unter additiven Fertigungsverfahren sind Prozesse zu verstehen, bei denen auf der Basis von digitalen 3D-Konstruktionsdaten durch das Ablagern von Material schichtweise ein Bauteil aufgebaut wird. Im allgemeinen Sprachgebrauch werden die additiven Fertigungsverfahren auch als 3D-Druckverfahren bezeichnet. Bekannte additive Fertigungsverfahren sind bspw. Stereolithographie, Selective Laser Sintering (SLS), Binder-Jet oder Fused Layer Modelling/Manufacturing (FLM).

Die additiven Fertigungsverfahren eignen sich insbesondere zur Herstellung von komplexen Geometrien, wie bspw. mit Hinterschnitten, Hohlräumen oder Überlappungen, welche mit den konventionellen Fertigungsverfahren gar nicht herzustellen sind.

Figur 3 zeigt als ein Ausführungsbeispiel des Filterelements 1 mit Filterkörper 2 mit einem mehrlagig, mehrschichtig oder mehrphasig aufgebauten Gefüge. Das Gefüge des Filterkörpers 2 weist eine Tragstruktur auf. Die Tragstruktur ist derart ausgebildet, dass sie dem Filterelement 1 bzw. Filterkörper 2 Eigenstabilität verleiht, und ist dabei porös genug, um einen Gasstrom mit relativ geringem Druckverlust durch den Filterkörper 2 strömen zu lassen. An einer Zuströmseite der Tragstruktur weist das Gefüge des Filterkörpers 2 eine als "Mutterporenstruktur" bezeichnete Grundstruktur 40 auf. Die Mutterporenstruktur 40 ist mit einer grobporigen, gasdurchlässigen Konfiguration ausgebildet, die aber dennoch eigenstabil ist, d.h. ihr eigenes Gewicht ohne Zuhilfenahme von weiteren Stützelementen tragen kann. Diese grobporige Konfiguration weist im Vergleich zu weiteren Lagen, Schichten oder Phasen des Filterkörpers 2, insbesondere im Vergleich zu der Oberflächenfiltrationsschicht 14, eine größere Porengröße auf. Die Mutterporenstruktur 40 ist als Fachwerkstruktur ausgebildet, die dem Filterkörper 2 eine grundsätzliche Stabilität verleiht bei geringem Eigengewicht. Die Fachwerksstruktur ist beispielhaft zu sehen und es sind auch andere Strukturen denkbar, welche eine gute Eigenstabilität bei möglichst geringem Eigengewicht und/oder bei möglichst geringem Strömungswiderstand aufweisen, etwa eine bionische Struktur. Die Tragstruktur bildet in entsprechenden Bereichen des Filterkörpers 2 zudem zusätzliche Komponenten aus, wie den Filterkopf oder den Filterfuß, oder ist zum Befestigen solcher Komponenten am Filterkörper 2 ausgebildet.

Auf einer Zuströmseite 41 der Mutterporenstruktur 40, die in Figur 3 auf der rechten Seite der Mutterporenstruktur 40 angeordnet ist, ist eine als Fachwerksstruktur ausgebildete dreidimensionale Stützstruktur 23 angeordnet. Wie der Filterkörper 2 samt Mutterporenstruktur 40 ist die Stützstruktur 23 ein mittels additiver Fertigung hergestelltes Bauteil. Additive Fertigung ermöglicht es, dass die Stützstruktur 23 relative große Hohlräume 26 zwischen den einzelnen Stützstrukturkomponenten aufweist und dennoch genügend Stabilität bereitstellt, um eine stabile Filterschicht zu erzeugen, insbesondere um eine stabile und dauerhafte Verbindung mit der Oberflächenfiltrationsschicht 14 bereitzustellen. Im vorliegenden Ausführungsbeispiel wird dies dadurch erreicht, dass die Stützstruktur 23 eine gitterartige Struktur aufweist, die drei in Strömungsrichtung des Gasstroms hintereinander angeordnete Gitterlagen 23.1, 23.3, 23.2 aufweist.

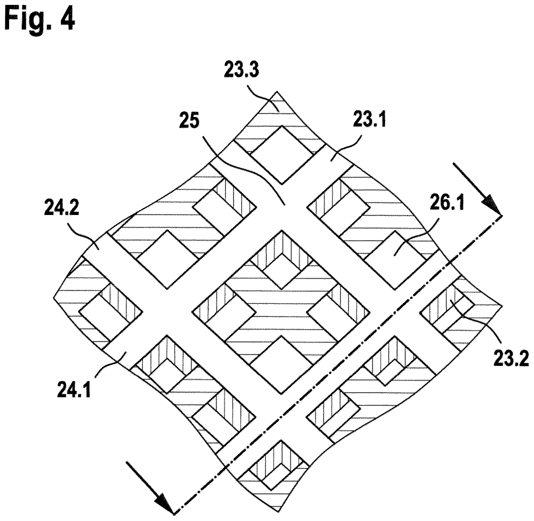

Figur 4 zeigt in einer perspektivischen Ansicht den grundsätzlichen Aufbau der dreidimensionalen Stützstruktur 23. Die Lage der Schnittebene für die Schnittansicht aus Figur 3 ist in Figur 4 ebenfalls angedeutet, wobei es sich versteht, dass in Figur 4 der besseren Übersichtlichkeit halber weder die erste Schicht 27 und zweite Schicht 28 der Oberflächenfiltrationsschicht 14 noch die Mutterporenstruktur 40 eingezeichnet sind. Die dreidimensionale Stützstruktur 23 weist eine erste Gitterlage 23.1 auf, die eine Zuströmseite der Stützstruktur 23 ausbildet und eine Zuströmseite des Filterkörpers 2 definiert, eine zweite Gitterlage 23.2, die eine Abströmseite der Stützstruktur 23 ausbildet und einer Abströmseite des Filterkörpers 2 zugewandt ist, und eine dritte Gitterlage 23.3, die eine Zwischenlage zwischen der ersten Gitterlage 23.1 und der zweiten Gitterlage 23.2 in Strömungsrichtung ausbildet. Zwischen und in den Gitterlagen 23.1 bis 23.3 sind die Hohlräume 26 ausgebildet. Die erste Gitterlage 23.1 wird auch als vordere Gitterlage, die zweite Gitterlage 23.2 als hintere Gitterlage und die dritte Gitterlage 23.3 als mittlere Gitterlage bezeichnet.

Die Gitterlagen 23.1 bis 23.3 sind im Wesentlichen parallel zueinander ausgerichtet. Eine Abweichung um bis zu 10° relativ zueinander ist ebenfalls als im Wesentliche parallel anzusehen. Die Gitterlagen 23.1 bis 23.3 sind so angeordnet, dass der Gasstrom G aus einer im Wesentlichen normalen Richtung auf die vordere Gitterlage 23.1 trifft und dann die Gitterlagen 23.1, 23.2, 23.3 in dieser Reihenfolge passiert. Die Gitterlagen 23.1 bis 23.3 sind jeweils aus Stäben 24.1 und 24.2 ausgebildet, die an Knoten 25 miteinander verbunden sind. Die Stäbe 24.1 und 24.2 verlaufen in der Ebene der jeweiligen Gitterlage 23.1, 23.2, 23.3, also quer (insbesondere orthogonal) zur Strömungsrichtung des Gasstroms beim Durchtritt durch die Gitterlagen 23.1 bis 23.3.. Jeder der Gitterlagen 23.1 bis 23.3 ist dabei gebildet durch eine Schar von zueinander parallelen ersten Stäben 24.1, die in eine erste Richtung verlaufen, und einen weitere Schar von zueinander parallelen zweiten Stäben 24.2, die in eine zweite Richtung verlaufen und die Schar von ersten Stäben kreuzen, Im vorliegenden Ausführungsbeispiel ist die zweite Richtung annähernd orthogonal zur ersten Richtung. Die ersten und zweiten Stäbe 24.1 und 24.2 definieren zusammen Öffnungen 26.1 (der Übersichtlichkeit halber ist nur eine dieser Öffnungen 26.1 in Figur 4 mit einem Bezugszeichen versehen). Jeder der Öffnungen 26.1 ist von zwei benachbarten ersten Stäben 24.1 und zwei benachbarten zweiten Stäben 24.2 zwischen den sich ergebenden vier Kreuzungsstellen dieser ersten und zweiten Stäbe 24.1, 24.2 gebildet. Die Kreuzungsstellen werden auch als Knoten 25 bezeichnet. Die Öffnungen 26.1 bilden für jede der drei Gitterlagen 23.1, 23.2, 23.3 sogenannte parametrisch gesteuerte Poren , durch die der Gasstrom die entsprechende Gitterlage 23.1 bis 23.3 passieren kann. Insbesondere bilden jeweils zwei parallel zueinander ausgerichtete benachbarte Stäbe 24.1 und zwei parallel ausgerichtete benachbarte Stäbe 24.2 zwischen sich eine jeweilige der Öffnungen 26.1. Die so gebildeten Öffnungen 26.1 haben in Figur 4 eine viereckige, insbesondere quadratische, Form. Alternativ können die Öffnungen 26.1 auch dreieckig, quadratisch, rechteckig, rautenförmig, parallelogrammförmig, vieleckig, rund oder elliptisch sein. Für die alternativen Ausführungen der Öffnungen 26.1 kann die entsprechende Gitterlage eine entsprechend andere Anordnung von mehreren Stäben bzw. mehreren Scharen von Stäben aufweisen, welche aneinander gefügt eine jeweilige Öffnung 26.1 mit mehreren Ecken begrenzen, beispielsweise wabenförmige (hexagonale) Öffnungen 26.1. Die Öffnungen 26.1 können auch unterschiedliche Formen in einer entsprechenden Gitterlage aufweisen, z.B. abwechselnd Fünfecke und Sechsecke.

Die Gitterlagen 23.1 bis 23.3 sind durch dritte Stäbe 24.3, die auch als Gitterlagen-Verbindungsstäbe bezeichnet werden, miteinander verbunden. Diese Gitterlagen-Verbindungsstäbe 24.3 verlaufen in einer Richtung quer zur Ebene der jeweiligen Gitterlagen 23.1, 23.3 bzw. 23.2, 23.3, die sie verbinden. Insbesondere verlaufen die Gitterlagen-Verbindungsstäbe 24.3 in einer Richtung orthogonal zur Ebene der jeweiligen Gitterlagen 23.1, 23.3 bzw. 23.2, 23.3, die sie verbinden. In dem gezeigten Ausführungsbeispiel haben die vordere Gitterlage 23.1 und die mittlere Gitterlage 23.3 den gleichen Abstand zueinander wie die hintere Gitterlage 23.2 und die mittlere Gitterlage 23.3 zueinander. Es ist ebenfalls möglich, dass die Abstände der Gitterlagen 23.1 bis 23.3 zueinander unterschiedlich sind, also der Abstand zwischen den Gitterlagen 23.1 und 23.3 sich von dem Abstand zwischen Gitterlagen 23.2 und 23.3 unterscheidet. Die Gitterlagen-Verbindungsstäbe 24.3 sind in dem gezeigten Ausführungsbeispiel im Wesentlichen entlang der Strömungsrichtung des Gasstroms G ausgerichtet.

In Bezug zu der vorderen Gitterlage 23.1 auf der Zuströmseite sind die Gitterlagen-Verbindungsstäbe 24.3 versetzt zu den Knoten 25 angeordnet. Auch in Bezug zu der benachbarten mittleren Gitterlage 23.3 sind die Gitterlagen-Verbindungsstäbe 24.3 versetzt zu den jeweiligen Knoten 25 angeordnet. Das bedeutet beispielsweise, dass das eine Ende (vorderes Ende) eines jeweiligen der Gitterlagen-Verbindungsstäbe 24.3 von einem der ersten Stäbe 24.1 der vorderen Gitterlage 23.1 in einem Abschnitt zwischen zwei Knoten 25 (genauer, in der Mitte zwischen zwei Knoten 25) ausgeht, aber das andere Ende (hinteres Ende) des Gitterlagen-Verbindungsstabs 24.3 1 in einem Abschnitt zwischen zwei Knoten 25 (genauer, in der Mitte zwischen zwei Knoten 25) eines der zweiten Stäbe 24.2 der mittleren Gitterlage 23.3 endet. Entsprechendes gilt, für Gitterlagen-Verbindungsstäbe 24.3, deren eines Ende von einem der zweiten Stäbe 24.2 in einem Abschnitt zwischen zwei Knoten 25 (genauer, in der Mitte zwischen zwei Knoten 25) der vorderen Gitterlage 23.1 ausgeht, und deren anderes Ende (hinteres Ende) in einem Abschnitt zwischen zwei Knoten 25 (genauer, in der Mitte zwischen zwei Knoten 25) eines der ersten Stäbe 24.1 der mittleren Gitterlage 23.3 endet. Die Gitterlagen-Verbindungsstäbe 24.3 verbinden also jeweils einen ersten Stab 24.1 der einen Gitterlage 21.1 mit einem zweiten Stab 24.2 der benachbarten Gitterlage 24.3 in einem Bereich, der nicht an einem Knoten 25 liegt (genauer, in der Mitte zwischen zwei Knoten 25 liegt).

Durch diese Anordnung bilden die Hohlräume 26 käfigartige Strukturen zwischen sich aus, sogenannte parametrisch gesteuerte Poren. Entsprechendes gilt auch für die Gitterlagen-Verbindungsstäbe 24.3, die die hintere Gitterlage 23.2 mit der mittleren Gitterlage 23.3 verbinden.

Eine andere Ausrichtung der Verbindungsstäbe 24.3 ist ebenfalls möglich, beispielsweise geneigt zur Strömungsrichtung des Gasstroms G. Bei entsprechend anderem Versatz der mittleren Gitterlage 23.3 zur vorderen Gitterlage 23.1 wäre auch eine in den Figuren nicht dargestellte Anordnung denkbar, bei der in Bezug zu der vorderen Gitterlage 23.1 auf der Zuströmseite die Gitterlagen-Verbindungsstäbe 24.3 an den Knoten 25 angeordnet sind und in Bezug zu der benachbarten mittleren Gitterlage 23.3 die Gitterlagen-Verbindungsstäbe 24.3 versetzt zu den jeweiligen Knoten 25 angeordnet sind. Dann würde ein Ende (vorderes Ende) der Gitterlagen-Verbindungsstäbe 24.3 jeweils an einem der Knoten 25 enden, an dem der Stab 24.1 den Stab 24.2 der vorderen Gitterlage 23.1 kreuzt, und das andere Ende (hinteres Ende) der Gitterlagen-Verbindungsstäbe 24.3 würde zwischen zwei benachbarten der Knoten 25 an einem der Stäbe 24.1 oder einem der Stäbe 24.2 der dritten (mittleren) Gitterlage 23.3 enden. Der Gitterlagen-Verbindungsstab 24.3 würde dann also einen Knoten 25 der vorderen Gitterlage 21.1 mit einem Stab 24.1 oder 24.2 der mittleren Gitterlage 24.3 in einem Bereich, der nicht an einem Knoten 25 liegt, verbinden. Auch durch eine solche Anordnung bilden die Hohlräume 26 käfigartige Strukturen zwischen sich aus, sogenannte parametrisch gesteuerte Poren. Entsprechendes gilt auch für die Gitterlagen-Verbindungsstäbe 24.3, die die hintere Gitterlage 23.2 mit der mittleren Gitterlage 23.3 verbinden. In Bezug zu der hinteren Gitterlage 23.2 auf der Abströmseite sind die Gitterlagen-Verbindungsstäbe 24.3 an den Knoten 25 angeordnet. In Bezug zu der benachbarten zweiten (mittleren) Gitterlage 23.3 sind die Gitterlagen-Verbindungsstäbe 24.3 allerdings versetzt zu den jeweiligen Knoten 25 angeordnet.

Im Ausführungsbeispiel weisen die Gitterlagen 23.1 bis 23.3 jeweils eine gleiche und regelmäßige Gitterstruktur auf, was bedeutet, dass die Anordnung von Öffnungen 26.1 und Stäben 24.1 und 24.2 der jeweiligen Gitterlage 23.1 bis 23.3 ein regelmäßiges Muster mit sich wiederholenden Konfigurationen von Stäben 24.1 und 24.2 zueinander und/oder Öffnungen 26.1 aufweist.

Im Ausführungsbeispiel sind die vordere Gitterlage 23.1 und die hintere Gitterlage 23.2 deckungsgleich zueinander angeordnet, und die mittlere Gitterlage 23.3 ist versetzt zu den Gitterlagen 23.1 und 23.2 angeordnet Insbesondere sind die Öffnungen 26.1 der vorderen Gitterlage 23.1 und der hinteren Gitterlage 23.2 bezüglich der Strömungsrichtung des Gasstroms fluchtend zueinander ausgerichtet, und die Öffnungen 26.1 der mittleren Gitterlage 23.3 sind bezüglich der Strömungsrichtung des Gasstroms in Querrichtung, insbesondere in Richtung orthogonal zur Strömungsrichtung versetzt, so dass die Stäbe 24.1 und 24.2 der mittleren Gitterlage 23.3 in Strömungsrichtung hinter beziehungsweise vor den Öffnungen 26.1 der Gitterlagen 23.1 und 23.2 zu sehen sind. In dem gezeigten Ausführungsbeispiel ist der Versatz der mittleren Gitterlage 22.3 zu der vorderen und hinteren Gitterlage 23.1, 23.2 so gewählt, dass die Knoten 25 der mittleren Gitterlage 23.3 genau mit den Mittelpunkten der Öffnungen 26.1 der vorderen und hinteren Gitterlage 23.1, 23.2 fluchten. Auf diese Weise können die dritten Stäbe 24.3, die die Gitterlagen 23.1, 23.2, 23.3 miteinander verbinden, orthogonal zu den Ebenen der Gitterlagen 23.1, 23.2, 23.3 verlaufen. Obwohl alle drei Gitterlagen 23.1, 23.2 und 23.3 je für sich dieselbe regelmäßige Gitterstruktur aufweisen, ergibt sich durch den Versatz der mittleren Gitterlage 23.3 in Bezug zu den anderen beiden Gitterlagen 23.1, 23.2 eine Art Hindernis für die Gasströmung beim Durchströmen der durch die Gitterlagen 23.1, 23.2, 23.3 definierten porösen Struktur (dreidimensionale Stützstruktur 23).

Auf diese Weise lässt sich mit denkbar unkomplizierter Geometrie der drei Gitterlagen 23.1, 23..2, 23.3 -und damit mit wenig Aufwand - eine Käfigstrukturbilden, die hervorragend geeignet ist, Material zur Bildung der Oberflächenfiltrationsschicht 14 in Hohlräume 26.1 der dreidimensionalen Stützstruktur 23, insbesondere in Hohlräume 26.1 zwischen der vorderen Gitterlage 23.1 und der mittleren Gitterlage 23.3, einzubetten und dort gegenüber Weitertransport in Strömungsrichtung der Gasströmung G festzuhalten.

Die drei Gitterlagen 23.1 bis 23.3 sind lediglich als Ausführungsbeispiel beschrieben. Es können auch nur zwei Gitterlagen oder mehr als drei Gitterlagen für die Stützstruktur eingesetzt werden.

Zwischen den Stäben 24.1 und 24.2 innerhalb einer jeweiligen der Gitterlagen 23.1, 23.2, 23.3 sowie zwischen den Gitterlagen 23.1 bis 23.3 und den Gitterlagen-Verbindungsstäbe 24.3 entstehen Hohlräume 26, die dreidimensional betrachtet, so miteinander verbunden sind, dass der Gasstrom G von der Zuströmseite 8 zur Abströmseite 9 durch die Hohlräume 26 strömen kann. In den Hohlräumen 26 zwischen der vorderen Gitterlage 23.1 und der mittleren Gitterlage 23.3 ist eine die Oberflächenfiltrationsschicht 14 angeordnet. Die Oberflächenfiltrationsschicht 14 wird ausgebildet, indem Partikel von einem ersten Typ 27.1 in die Hohlräume 26 eingebracht und dort aufgenommen werden, so dass die Partikel vom ersten Typ 27.1 darin einbettet sind. Die Füllung der Hohlräume 26 mit Partikeln vom ersten Typ 27.1 erfolgt so, dass sich eine erste Schicht 27 mit einer Porengröße zwischen 1 µm und 200 µm ausbildet. Beispielsweise können die Partikel vom ersten Typ 27.1 eine Korngröße von 25 µm bis 200 µm aufweisen. Im Ausführungsbeispiel sind die Partikel vom ersten Typ 27.1 hauptsächlich in Hohlräumen 26 zwischen der vorderen Gitterlage 23.1 und der mittleren Gitterlage 23.3 aufgenommen. Dabei besetzen mehrere Partikel vom ersten Typ 27.1 jeweils einen der Hohlräume 26 und bilden zum Teil Agglomerate, in manchen Fällen sogar Agglomerate mit Partikeln vom ersten Typ 27.1, die in benachbarten Hohlräumen 26 aufgenommen sind. Die so durch Zusammenwirken der dreidimensionalen Stützstruktur 23 mit Partikeln vom ersten Typ 27.1 gebildete erste Oberflächenfiltrationsschicht 27 weist eine geringere Porengröße auf als die dreidimensionale Stützstruktur 23 für sich. Die erste Oberflächenfiltrationsschicht 27 bildet eine Grundlage , auf die weitere Schichten, insbesondere eine zweite Oberflächenfiltrationsschicht 28 oder noch weitere Oberflächenfiltrationsschichten aufgebracht werden können.

Auf der ersten Oberflächenfiltrationsschicht 27 ist die zweite Oberflächenfiltrationsschicht 28 von der Zuströmseite her aufgebracht. Die zweite Oberflächenfiltrationsschicht 28 bildet eine Oberfläche des Filterelements 1 auf der Zuströmseite 8 aus. In dem gezeigten Ausführungsbeispiel ist die Oberfläche allein, jedenfalls weitgehend allein, durch die zweite Oberflächenfiltrationsschicht 28 gebildet. Die zweite Oberflächenfiltrationsschicht 28 ist im Wesentlichen auf der dreidimensionalen der Stützstruktur 23 und der ersten Oberflächenfiltrationsschicht 27 angeordnet und deckt diese nach außen ab. Im Ausführungsbeispiel weist die zweite Oberflächenfiltrationsschicht 28 eine Vielzahl von Partikel von einem zweiten Typ 28.1 (mit einer Korngröße zwischen 0,1 µm und 20 µm) auf, so dass die zweite Oberflächenfiltrationsschicht 28 eine Porengröße zwischen 0,1 µm und 20 µm aufweist. Die Porengröße der zweiten Oberflächenfiltrationsschicht 28 fällt somit geringer aus als die Porengröße der ersten Oberflächenfiltrationsschicht 27 und nochmals geringer als die in Strömungsrichtung des Gasstroms folgenden Schichten bzw. Strukturen. Die Größe der Partikel 28.1 ermöglicht es, dass die Partikel 28.1 sich in Poren, die in der ersten Oberflächenfiltrationsschicht 27 ausgebildet sind, setzen und auch eine Oberfläche der Oberflächenfiltrationsschicht 27 wenigstens teilweise überlagern. Die Poren der Oberflächenfiltrationsschichten 27 und 28 sind so zueinander angeordnet, dass sie einem Gasstrom das Durchströmen erlauben. Aufgrund der geringen Porengröße der zweiten Oberflächenfiltrationsschicht 28 kann das Filterelement 1, welches diese Oberflächenfiltrationsschicht 28 aufweist, gut und effektiv abgereinigt werden.

In weiteren Ausgestaltungen sind auch Konfigurationen denkbar, bei denen die zweite Oberflächenfiltrationsschicht 28 die erste Oberflächenfiltrationsschicht 27 und ggf. auch die dreidimensionale der Stützstruktur 23 nicht vollständig nach au-βen abdeckt. In solchen Ausführungsformen liegen Partikel vom ersten Typ 27.1 und ggf. auch Teile der dreidimensionalen Stützstruktur 23 nach außen frei. Die Oberfläche des Filterelements 1 wird somit die zweite Oberflächenfiltrationsschicht 28 in Zusammenwirkung mit der ersten Oberflächenfiltrationsschicht 27 und ggf. auch der dreidimensionalen Stützstruktur 23 gebildet.

Im Betrieb sammelt sich an der Oberflächenfiltrationsschicht 14 eine immer mehr zunehmende Menge an Fremdstoffen an und bildet einen Filterkuchen, dessen Dicke mit der Zeit zunimmt und der nach und nach die Poren der Oberflächenfiltrationsschicht 14 verschließt. Das verschlechtert die den Gasdurchfluss des Filterelements 1. Daher ist es notwendig, die Oberflächenfiltrationsschicht 14 von Zeit zu Zeit zu reinigen. Herkömmlich geschieht dies mittels Druckluftimpulsen, mit denen das Filterelement 1 in der Regel von der Reinfluidseite her beaufschlagt wird. Um dies während des Betriebs des Filterelements 1 vornehmen zu können, kann beispielsweise das Filterelement mit einem Druckluftimpuls beaufschlagt werden, so dass ein Druckstoß erzeugt wird und durch das Filterelement 1 auf am Filterelement 1 als Filterkuchen anhaftende Fremdstoffe übertragen wird und die abgelagerten Fremdstoffe von der Oberflächenfiltrationsschicht 14 abfallen und somit die Poren gereinigt werden und wieder "frei" sind.

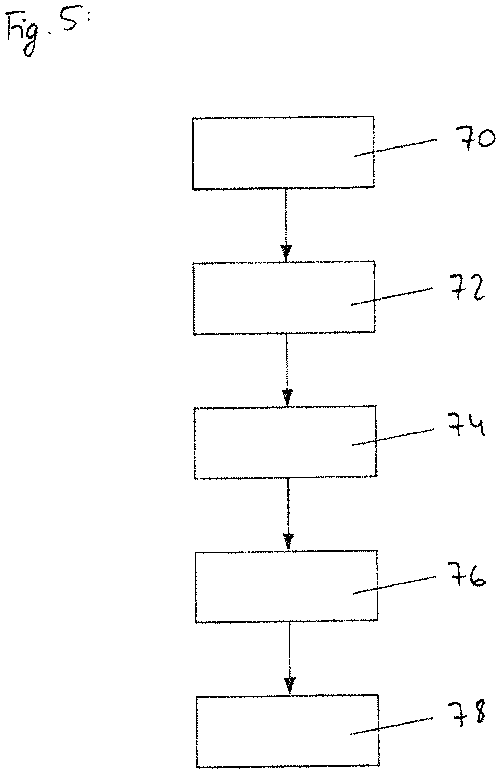

Figur 5 zeigt ein Ablaufdiagramm eines Verfahrens zum Fertigen des eigenstabilen, durchströmungsporösen Filterelements 1. Zunächst wird mit Hilfe eines additiven Fertigungsverfahrens in einem ersten Schritt 70 eine Tragstruktur hergestellt. Auf dieser Tragstruktur kann dann in einem zweiten Schritt 72 die Mutterporenstruktur 40 aufgebracht werden. Daran anschließend kann in einem dritten Schritt 74 mittels desselben additiven Fertigungsverfahrens die dreidimensionale Stützstruktur 23 auf der Mutterporenstruktur 40 angeordnet werden. Dabei werden die Hohlräume 26 in der dreidimensionalen Stützstruktur 23 ausgebildet. Die vorangehend separat beschriebenen Schritte Ausbilden der Tragstruktur (Schritt 70), Ausbilden der Mutterporenstruktur 40 (Schritt 72) und Ausbilden der dreidimensionalen Stützstruktur 23 (Schritt 74) können auch in einem einzigen additiven Fertigungsprozess durchgeführt werden, etwa durch gleichzeitiges Drucken aller drei Strukturen mittels eines 3D-Druckers.

Darauf folgt in Schritt 76 das Ausbilden der Oberflächenfiltrationsschicht durch teilweises Ausfüllen der Hohlräume 26 der dreidimensionalen Stützstruktur 23 mit den Partikeln vom ersten Typ 27.1 zum Ausbilder der ersten Oberflächenfiltrationsschicht 27. Im Ausführungsbeispiel füllen die Partikel 27.1 hauptsächlich die Hohlräume 26 aus, die zwischen der Gitterlage 23.1 und der Gitterlage 23.3 ausgebildet sind. In Schritt 78 wird die zweite Oberflächenfiltrationsschicht 28 auf der ersten Oberflächenfiltrationsschicht 27 aufgebracht, wobei die Partikel 28.1 teilweise Zwischenräume, die zwischen den Partikeln 27.1 ausgebildet sind, befüllen. Die zweite Oberflächenfiltrationsschicht 28 bildet eine poröse Oberfläche auf der ersten Oberflächenfiltrationsschicht aus, die über den Filterkörper 2 hinweg die geringste Porengröße aufweist.

Es ist möglich, dass das gesamte beispielhafte Verfahren mit dem additiven Fertigungsverfahren durchgeführt wird. Die Oberflächenfiltrationsschicht kann dabei beispielsweise über Materialgradienten (SLS, SLM, Binderjetting), Additive in Bindern oder Polymeren (FDM, SLA, Binderjetting), über Voxel aus dem CAD (Particlejetting, Binderjetting, Multijetfusion), Maschinenpfade und Laserscangeschwindigkeit (SLS, SLM) realisiert werden. In einem weiteren Ausführungsbeispiel können die Schritte 70 bis 74 mit einem additiven Fertigungsverfahren durchgeführt werden, und die Schritte 76 und 78 mit einem oder mehreren Beschichtungsverfahren, der eingangs beschriebenen Art.

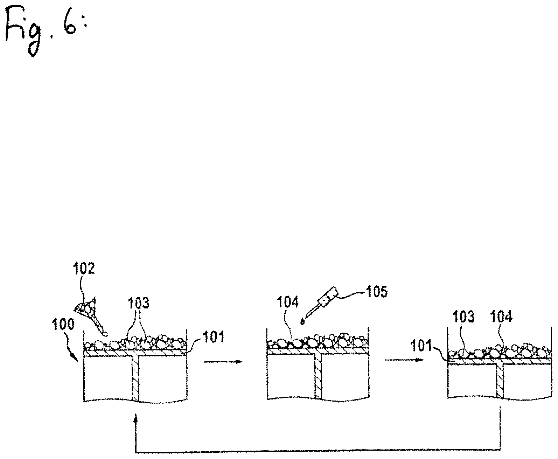

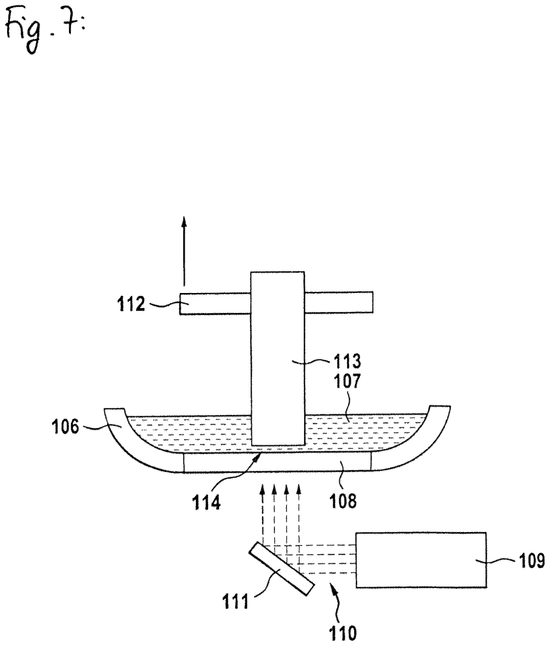

Die Figur 6 und 7 zeigen schematisch zwei mögliche additive Fertigungsverfahren zur Herstellung des Filterelements 1, zumindest aber zur Herstellung des Filterkörpers 2.

Figur 6 zeigt ein beispielhaftes Verfahren nach dem "bottom-up"-Prinzip, das bedeutet, dass das zu fertigende Bauteil von "unten" nach "oben" aufgebaut wird. Das schematisch gezeigte Herstellungsverfahren läuft wie folgt ab: In einem Behälter 100 ist ein absenkbarer Boden 101, der auch als Trägerplatte 101 bezeichnet werden kann, angeordnet. Auf dieser Trägerplatte 101 werden in einer vorbestimmten Dosierung, beispielsweise mittels einer Dosierungshilfe 102, Kunststoffpartikel 103, beispielsweise als Granulat oder Pulver, aufgebracht.

Anschließend bringt man gezielt an vorbestimmten Stellen eine Mischung 104 aus einem Klebstoff, Lösungsmittel(n) und/oder Wasser auf, beispielsweise mittels einer Dosierungshilfe 105, um die dortigen Kunststoffpartikel 103 miteinander zu verbinden, um so die erste Schicht des zu fertigenden Bauteils auszubilden. Die Dosierungshilfe 105 kann bspw. als ein Druckkopf (Inkjet) ausgebildet sein.

In einem nächsten Schritt senkt man die Trägerplatte 101 ab und wiederholt das Prozedere. Dies macht man so lange, bis das zu fertigende Bauteil vollständig hergestellt ist. Danach kann man die nicht verklebten Kunststoffpartikel 103 entfernen und das in der Mischung 104 enthaltene Wasser und/oder Lösungsmittel verdunsten lassen, wodurch ein poröser Körper entsteht.

Anstelle der Verwendung von Wasser und/oder Lösungsmittel ist es auch denkbar, leicht lösliche Harze zu verwenden, die zum Schluss aus dem Bauteil herausgewaschen werden können, um die Porosität zu erzeugen.

Ein solches Verfahren kann auch als Binderjet-Verfahren bezeichnet werden.

Es ist auch denkbar, statt einer Klebstoff-Mischung einen reinen Klebstoff (d.h. einen Klebstoff ohne Zugabe von Lösungsmittel und/oder Wasser und ohne Zugabe leicht löslicher Harze) zu verwenden. Dieser Klebstoff wird mittels der Dosierungshilfe 105 gezielt auf einzelne Stellen des aufgebracht um diese mit einander zu verkleben.

Ein weiteres nach dem "bottom up" Prinzip arbeitendes Verfahren ist das oben beschriebene Selektive Lasersintern (SLS), bei dem ein Laser über eine Schicht aus einem pulverförmigen Ausgangsmaterial geführt wird, um selektiv an vorgesehenen Stellen der Schicht ein Sintern des pulverförmigen Ausgangsmaterials zu erzielen.

Figur 7 zeigt schematisch ein beispielhaftes Verfahren nach dem "top-down"-Prinzip, das bedeutet, dass das zu fertigende Bauteil von "oben" nach "unten" aufgebaut wird. In Figur 10 ist hierfür beispielhaft das sogenannte "Continuous Liquid Interface Production"-Verfahren dargestellt. Das "Continuous Liquid Interface Production"-Verfahren gehört zu den Stereolithographie-Verfahren und unterscheidet sich von vielen anderen bekannten additiven Fertigungsverfahren insbesondere darin, dass das zu fertigende Bauteil kontinuierlich aufgebaut wird.

Herkömmliche additive Fertigungsverfahren arbeiten in der Regel mit sogenannten zweidimensionalen Druckprozessen. Unter einem zweidimensionalen Druckprozess ist zu verstehen, dass eine (dünne) Schicht des zu fertigenden Bauteils erzeugt wird und dieser Vorgang so häufig wiederholt wird, dass so Schicht für Schicht das zu fertigende, dreidimensionale Bauteil erzeugt wird.

Das "Continuous Liquid Interface Production"-Verfahren läuft prinzipiell wie folgt ab: Auf einer wannenähnlichen Plattform 106 befindet sich ein flüssiges Polymer 107, bspw. ein photosensitives Kunstharz. Ein Boden 108 der Plattform 106 ist zumindest teilweise transparent für ultraviolettes Licht (UV-Licht). Unterhalb der Plattform 106 ist eine Lichtquelle 109 für UV-Licht, bspw. ein Projektor, angeordnet, welcher einen oder mehrere UV-Lichtstrahlen 110 aussendet. Diese werden entweder direkt oder durch Umlenkung, bspw. mittels eines Spiegels 111 durch den Boden 108 auf das flüssige Polymer gerichtet und präzise auf die Fläche fokussiert, an der das flüssige Polymer aushärten soll.

Ferner besitzt der Aufbau für das "Continuous Liquid Interface Production"-Verfahren eine verfahrbare Trägerplatte 112, welche in einer Richtung senkrecht zur Plattform 106 bewegt werden kann. Durch eine kontinuierliche Bewegung der Trägerplatte 112 wird so das zu fertigende Bauteil von der Plattform 106 ausgehend langsam aus dem flüssigen Polymer 107 gezogen, sodass das flüssige Polymer 107 nachfließen kann. Die letzte gerade erzeugte Schicht des zu fertigenden Bauteils 113 sowie die Plattform 106 bleiben so immer mit dem flüssigen Polymer 107 bedeckt, das durch die UV-Strahlen 110 weiter gehärtet werden kann.

Unterhalb des flüssigen Polymers 107 ist eine sauerstoffdurchlässige Membran angebracht, die eine flüssig bleibende Übergangsphase, eine sogenannte "dead zone" 114, erzeugt, die das flüssige Polymer 107 daran hindert, sich am Boden 108 der Plattform 106 abzulagern und dort auszuhärten, bspw. zu polymerisieren. Statt einer sauerstoffdurchlässigen Membran sind auch andere semipermeable Membrane denkbar, welche für einen von Sauerstoff verschiedenen Aushärthemmstoffe, bzw. Polymerisationshemmer, durchgängig sind.

Somit stellt das "Continuous Liquid Interface Production"-Verfahren einen kontinuierlichen Druckprozess dar, wodurch der Herstellungsprozess gegenüber anderen, das Bauteil schichtweise erzeugenden Verfahren deutlich kürzer ist.

Die Wahl sowie die Zusammensetzung des zur Herstellung des Kunststoffs verwendeten Polymermaterials steht in direktem Zusammenhang mit dem Herstellungsverfahren und umgekehrt.

So kann der Filterkörper 2 als einen Hauptbestandteil ein thermoplastisches Polymermaterial aufweisen. Hierzu zählen unter anderem Polyethylen (PE), Polypropylen (PP) und Polyphenylensulfid (PPS), die bisher auch schon als Filterkörpermaterial eingesetzt werden. Jedoch sind auch andere thermoplastische Polymere, wie bspw. Polyimid (PI), Polyamid (PA), Polyvinylalkohol (PVA), Polyactide (PLA) oder Polyetheretherketon (PEEK), oder auch thermoplastische Mischpolymere denkbar. Insbesondere sind thermoplastische Polymere denkbar, die als "technische Thermoplaste" oder als "Hochleistungsthermoplaste" klassifiziert sind.

In Abhängigkeit von den Betriebszuständen und den daraus resultierenden erforderlichen Eigenschaften, die das Filterelement 1 besitzen muss, kann es möglich sein, dass ein duroplastisches Polymermaterial statt eines thermoplastischen Polymermaterials verwendet wird. Zu den duroplastischen Polymermaterialien zählen insbesondere Epoxidharz, Phenolharz, Polyesterharz, Melaminharz, Siliconharz, und Urethanharz. Auch hier ist ein Mischpolymer auf Basis eines duroplastischen Polymermaterials denkbar. Der Hauptunterschied zu den thermoplastischen Polymermaterialien liegt darin, dass bei Duroplaste ein Aushärten des Polymermaterials erfolgt und diese infolge dessen deutlich stärker vernetzt sind und daher nicht mehr aufgeschmolzen werden können. Daraus resultiert in der Regel auch eine höhere Rissbildungswahrscheinlichkeit.

Insbesondere für ein kontinuierliches, additives Fertigungsverfahren, wie bspw. das "Continuous Liquid Interface Production"-Verfahren, sind UV-vernetzende Polymermaterialen besonders geeignet. Es ist ferner auch denkbar, die UV-Lichtstrahlung durch eine andere bestimmte Strahlung des Lichtspektrums, beispielseise Infrarot-Lichtstrahlung (IR-Lichtstrahlung), zu ersetzen. Hierbei sind dann Polymermaterialien zu wählen, die durch Einstrahlung von IR-Lichtstrahlung aushärten, d.h., sich vernetzen.

## Patentansprüche

1. Eigenstabiles, durchströmungsporöses Filterelement (1) zur Filterung von Fremdstoffen aus einem Gasstrom, **dadurch gekennzeichnet, dass** das Filterelement folgende Merkmale umfasst:
einen Filterkörper (2) aus Kunststoff mit einer Zuströmseite (8) und einer gegenüberliegenden Abströmseite (9), wobei auf der Zuströmseite (8) eine Oberflächenfiltrationsschicht (14) ausgebildet ist,
wobei der Filterkörper (2) eine in einem additiven Herstellungsprozess gefertigte dreidimensionale Stützstruktur (23) aufweist, die Hohlräume (26) aufweist, durch welche Gas von der Zuströmseite (8) zu der Abströmseite (9) strömen kann, und
wobei die Oberflächenfiltrationsschicht (14) wenigstens teilweise die Hohlräume (26) der dreidimensionalen Stützstruktur (23) ausfüllt.

2. Filterelement (1) nach Anspruch 1, wobei die dreidimensionale Stützstruktur (23) eine zur Zuströmseite (8) hin offene Käfigstruktur aufweist; und/oder
wobei dreidimensionale Stützstruktur (23) korbartige, becherartige oder trichterförmige Hohlräume (26) mit je einer Bodenseite und einer gegenüber liegenden offenen Seite bildet, wobei die offene Seite zur Zuströmseite (8) weist;
wobei insbesondere die korbartigen, becherartigen oder trichterförmigen Hohlräume (26) jeweils eine seitliche Begrenzung aufweisen, die die Bodenseite mit der offenen Seite verbindet und Öffnungen aufweist, durch die benachbarte korbartige, becherartige oder trichterförmige Hohlräume (26) miteinander in Verbindung stehen;
wobei insbesondere die offene Seite eines jeweiligen Hohlraums (26) vordere Öffnungen (26.1) aufweist und die Bodenseite und/oder die seitlichen Begrenzung hintere Öffnungen aufweist, wobei in einer orthogonalen Projektion von der offenen Seite zur Bodenseite innerhalb einer durch eine vordere Öffnung (26.1) der offenen Seite definierten Fläche eine Mehrzahl von hinteren Öffnungen der Bodenseite und/oder der seitlichen Begrenzung liegen;
wobei insbesondere die offene Seite eines jeweiligen Hohlraums (26) nur eine Öffnung (26.1) aufweist.

3. Filterelement (1) nach Anspruch 1 oder 2, wobei der Filterkörper (2) eine zwischen seiner Zuströmseite (8) und seiner Abströmseite (9) verlaufende Dickenrichtung definiert und die Oberflächenfiltrationsschicht (14) über mindestens 10 % der Dicke der Oberflächenfiltrationsschicht (14) hinweg Hohlräume (26) der dreidimensionalen Stützstruktur (23) ausfüllt, insbesondere über mindestens 25 % der Dicke, insbesondere über mindestens 50 % der Dicke, insbesondere zwischen 25 % und 100 % der Dicke, insbesondere zwischen 50 % und 75 % der Dicke; und/oder die Oberflächenfiltrationsschicht (14) über mindestens 10 % der Dicke der dreidimensionalen Stützstruktur (23) hinweg Hohlräume (26) der dreidimensionalen Stützstruktur (23) ausfüllt, insbesondere über mindestens 25 % der Dicke, insbesondere über mindestens 50 % der Dicke, insbesondere zwischen 25 % und 100 % der Dicke, insbesondere zwischen 50 % und 75 % der Dicke.

4. Filterelement (1) nach einem der Ansprüche 1 bis 3, wobei die Oberflächenfiltrationsschicht (14) eine erste Schicht (27) aufweist, die wenigstens zum Teil, insbesondere zu ihrem größeren Teil, insbesondere im Wesentlichen vollständig, Hohlräume (26) der dreidimensionalen Stützstruktur (23) ausfüllt;
wobei insbesondere die Oberflächenfiltrationsschicht (14) mindestens eine zweite Schicht (28) aufweist, die an der ersten Schicht (27) von der Zuströmseite (8) her aufgebracht ist, wobei insbesondere die zweite Schicht (28) eine Oberfläche an der Zuströmseite (8) des Filterkörpers (2) ausbildet;
wobei insbesondere die die zweite Schicht (28) wenigstens teilweise Zwischenräume in der ersten Schicht (27) besetzt;
wobei die erste Schicht (27) und die zweite Schicht (28) unterschiedliche Porengrößen aufweisen, wobei insbesondere die Porengröße der ersten Schicht (27) größer ist als die Porengröße der zweiten Schicht (28)
wobei insbesondere jedenfalls die zweite Schicht (28) Partikel aus PE, PTFE, SiO₂, insbesondere Hohlglas, Vollglas, Schaumglas oder Sand, PPS, Aluminiumoxid, oder einer Mischung aus wenigstens zwei der genannten Materialien enthält.

5. Filterelement (1) nach einem der vorherigen Ansprüche, wobei die Oberflächenfiltrationsschicht (14) wenigstens teilweise, jedenfalls aber die erste und die zweite Schicht (27, 28), als Beschichtung ausgebildet ist, insbesondere mittels Flüssigkeitsabscheidung, Aufsprühen, Aufbürsten, Tauchbeschichten, Einbrennen und/oder eines thermischen Spritzverfahrens, insbesondere Flammspritzen.

6. Filterelement (1) nach einem der vorherigen Ansprüche, wobei die dreidimensionale Stützstruktur (23) eine fachwerkartige Konfiguration aufweist mit Stäben (24.1, 24.2), die an Knotenstellen (25) miteinander verbunden sind.

7. Filterelement (1) nach einem der vorherigen Ansprüche, wobei die dreidimensionale Stützstruktur (23) eine gitterartige Struktur aufweist, die mindestens zwei Gitterlagen (23.1, 23.2, 23.3) bildet, von denen die eine Gitterlage (23.1) der Zuströmseite (8) zugewandt ist, insbesondere die Zuströmseite (8) definiert, und die andere Gitterlage (23.2) der Abströmseite (9) zugewandt ist, wobei die Gitterlagen (23.1, 23.2, 23.3) durch Stäbe (24.3) oder Stege miteinander verbunden sind;
wobei insbesondere die eine und/oder die andere Gitterlage (23.1, 23.2, 23.3) eine Konfiguration aufweist mit Stäben (24.1, 24.2), die an Knoten (25) miteinander verbunden sind und Öffnungen (26.1) definieren, insbesondere wobei die eine und/oder die andere Gitterlage (23.1, 23.2, 23.3) eine regelmäßige Gitterstruktur aufweist.

8. Filterelement (1) nach Anspruch 7, wobei die wenigstens zwei Gitterlagen (23.1, 23.2, 23.3) so angeordnet sind, dass die Öffnungen (26.1) der einen der beiden Gitterlagen (23.1, 23.2, 23.3) versetzt zu den Öffnungen (26.1) der anderen der beiden Gitterlagen (23.1, 23.2, 23.3) angeordnet sind.

9. Filterelement (1) nach einem der Ansprüche 7 bis 8, wobei die dreidimensionale Stützstruktur (23) drei in Strömungsrichtung zwischen der Zuströmseite (8) und der Abströmseite (9) des Filterkörpers (2) hintereinander liegende Gitterlagen (23.1, 23.2, 23.3) aufweist, wobei Öffnungen (26.1) der mittleren Gitterlage (23.3) versetzt zu Öffnungen (26.1) der beiden anderen Gitterlagen (23.1, 23.2) angeordnet sind; wobei insbesondere die dreidimensionale Stützstruktur (23) drei in Strömungsrichtung zwischen der Zuströmseite (8) und der Abströmseite (9) des Filterkörpers (2) hintereinander liegende Gitterlagen (23.1, 23.2, 23.3) aufweist, wobei Öffnungen (26.1) der beiden äußeren Gitterlagen (23.1, 23.2) deckungsgleich angeordnet sind.

10. Filterelement (1) nach einem der Ansprüche 7 bis 9, wobei die Öffnungen (26.1) der einen, der anderen und/oder der mittleren Gitterlage (23.1, 23.2, 23.3) dreieckig, viereckig, insbesondere quadratisch, rechteckig, rautenförmig oder parallelogrammförmig, vieleckig, rund und/oder elliptisch ausgebildet sind; und/oder
, wobei die Stege oder Stäbe, die je zwei benachbarte Gitterlagen miteinander verbinden, versetzt zu den Knoten der beiden Gitterlagen angeordnet sind.

11. Filterelement (1) nach einem der vorherigen Ansprüche, wobei der Filterkörper (2) weiterhin eine dreidimensionale Mutterporenstruktur (40) aufweist, wobei die dreidimensionale Stützstruktur (23) an der Zuströmseite (41) der dreidimensionalen Mutterporenstruktur (40) angeordnet ist;, wobei insbesondere die dreidimensionale Mutterporenstruktur (40) eine größere Porengröße aufweist als die dreidimensionale Stützstruktur (23); und/oder
wobei das Filterelement (1) als Hohlkörper ausgebildet ist, wobei die Zuströmseite (8) des Filterkörpers (2) auf einer Außenseite des Hohlkörpers liegt und die Abströmseite (9) des Filterkörpers (2) auf einer Innenseite des Hohlkörpers liegt.

12. Verfahren zur Herstellung eines eigenstabilen, durchströmungsporösen Filterelements (1) zur Filterung von Fremdstoffen aus einem Gasstrom, bei dem ein Filterkörper (2) aus Kunststoff mit einer Zuströmseite (8) und einer gegenüberliegenden Abströmseite (9) ausgebildet wird, wobei das Verfahren die folgenden Schritte aufweist:
Herstellen einer dreidimensionalen Stützstruktur (23) mittels eines additiven Fertigungsverfahrens, derart dass in der dreidimensionalen Stützstruktur (23) Hohlräume (26) ausgebildet werden, durch welche Gas von der Zuströmseite (8) zu der Abströmseite (9) strömen kann;
Ausbilden einer Oberflächenfiltrationsschicht (14) durch teilweises Ausfüllen der Hohlräume (26) der dreidimensionalen Stützstruktur (23),
wobei die dreidimensionale Stützstruktur (23) ein Kunststoffmaterial aufweist.

13. Verfahren nach Anspruch 12, wobei beim Herstellen der dreidimensionalen Stützstruktur (23) mittels des additiven Fertigungsverfahrens eine zur Zuströmseite (8) hin offene Käfigstruktur ausgebildet wird; und/oder
wobei beim Herstellen der dreidimensionalen Stützstruktur (23) mittels des additiven Fertigungsverfahrens korbartige, becherartige oder trichterförmige Hohlräume (26) mit je einer Bodenseite und einer gegenüber liegenden offen Seite ausgebildet werden, wobei die offene Seite zur Zuströmseite (8) weist; wobei insbesondere für die korbartigen, becherartigen oder trichterförmigen Hohlräume (26) je eine seitliche Begrenzung ausgebildet wird, die die Bodenseite mit der offenen Seite verbindet und Öffnungen aufweist, durch die benachbarte der korbartigen, becherartigen oder trichterförmigen Hohlräume (26) miteinander in Verbindung stehen;
wobei insbesondere in der offenen Seite eines jeweiligen Hohlraums (26) vordere Öffnungen (26.1) ausgebildet werden und in der Bodenseite und/oder deren seitlichen Begrenzung hintere Öffnungen ausgebildet werden, wobei in einer orthogonalen Projektion von der offenen Seite zur Bodenseite innerhalb einer durch eine vordere Öffnung (26.1) der offenen Seite definierten Fläche eine Mehrzahl von hinteren Öffnungen der Bodenseite und/oder der seitlichen Begrenzung liegen;
wobei insbesondere in der offenen Seite eines jeweiligen Hohlraums (26) nur eine Öffnung (26.1) ausgebildet wird.

14. Verfahren nach Anspruch 12 oder 13, aufweisend Einbetten von Material in Hohlräume (26) der Stützstruktur (23) zur Ausbildung einer ersten Schicht (27) der Oberflächenfiltrationsschicht (14), derart dass ein größerer Teil des Materials für die erste Schicht Hohlräume (26) der dreidimensionalen Stützstruktur (23) ausfüllt;
aufweisend insbesondere Aufbringen mindestens einer zweiten Schicht (28) an der ersten Schicht (27), insbesondere derart dass die zweite Schicht (28) eine Oberflächenfiltrationsschicht (14) an der Zuströmseite (8) des Filterkörpers (2) ausbildet.

15. Verfahren nach einem der Ansprüche 12 bis 14, wobei die Oberflächenfiltrationsschicht (14) als Beschichtung ausgebildet wird, insbesondere mittels Flüssigkeitsabscheidung, Aufsprühen, Aufbürsten, Tauchbeschichten, Einbrennen und/oder eines thermischen Spritzverfahrens, insbesondere Flammspritzen; und/oder
wobei beim Herstellen der dreidimensionalen Stützstruktur (23) mittels eines additiven Fertigungsverfahrens, insbesondere Lasersintern oder Stereolithographie, eine fachwerkartige Konfiguration mit Stäben (24.1, 24.2, 24.3) oder Stegen, die an Knoten (25) miteinander verbunden sind, ausgebildet wird; und/oder
wobei beim Herstellen der dreidimensionalen Stützstruktur (23) eine gitterartige Struktur ausgebildet wird, die mindestens zwei Gitterlagen (23.1, 23.2, 23.3) bildet, wobei die eine Gitterlage (23.1) die Zuströmseite (8) definiert und die andere Gitterlage (23.2) der Abströmseite (9) zugewandt ist, wobei die Gitterlagen (23.1, 23.2, 23.3) durch Stäbe (24.3) oder Stege miteinander verbunden sind.

## Claims

1. An inherently stable, throughflow-porous filter element (1) for filtering foreign substances from a gas stream,
**characterized in that** the filter element comprises:
a filter body (2) made of plastic and having an inflow side (8) and an opposite outflow side (9), with a surface filtration layer (14) being formed on the inflow side (8),
wherein the filter body (2) comprises a three-dimensional support structure (23) manufactured in an additive manufacturing process and having cavities (26) through which gas can flow from the inflow side (8) to the outflow side (9), and
wherein the surface filtration layer (14) at least partially fills the cavities (26) of the three-dimensional support structure (23).

2. The filter element (1) according to claim 1,
wherein the three-dimensional support structure (23) has a cage structure that is open towards the inflow side (8); and/or
wherein the three-dimensional support structure (23) forms basket-like, cup-like or funnel-like cavities (26), each having a bottom side and an opposite open side, the open side facing the inflow side (8);
wherein in particular the basket-like, cup-like or funnel-like cavities (26) each have a lateral boundary which connects the bottom side to the open side and has openings through which adjacent basket-like, cup-like or funnel-like cavities (26) are in communication with one another;
wherein in particular the open side of a respective cavity (26) has front openings (26.1) and the bottom side and/or the lateral boundary has rear openings, wherein in an orthogonal projection from the open side to the bottom side, a plurality of rear openings of the bottom side and/or the lateral boundary is located within an area defined by a front opening (26.1) of the open side;
wherein in particular the open side of a respective cavity (26) has only one opening (26.1).

3. The filter element (1) according to claim 1 or 2,
wherein the filter body (2) defines a thickness direction extending between its inflow side (8) and its outflow side (9), and the surface filtration layer (14) fills cavities (26) of the three-dimensional support structure (23) over at least 10% of the thickness of the surface filtration layer (14), in particular over at least 25% of the thickness, in particular over at least 50% of the thickness, in particular between 25% and 100% of the thickness, in particular between 50% and 75% of the thickness;
and/or the surface filtration layer (14) fills cavities (26) of the three-dimensional support structure (23) over at least 10% of the thickness of the three-dimensional support structure (23), in particular over at least 25% of the thickness, in particular over at least 50% of the thickness, in particular between 25% and 100% of the thickness, in particular between 50% and 75% of the thickness.

4. The filter element (1) according to any of claims 1 to 3,
wherein the surface filtration layer (14) comprises a first layer (27) which at least partially, in particular to its greater part, in particular substantially completely, fills cavities (26) of the three-dimensional support structure (23); wherein in particular the surface filtration layer (14) comprises at least one second layer (28) which is applied to the first layer (27) from the inflow side (8), wherein in particular the second layer (28) forms a surface on the inflow side (8) of the filter body (2);
wherein in particular the second layer (28) at least partially occupies interstices in the first layer (27);
wherein the first layer (27) and the second layer (28) have different pore sizes, wherein in particular the pore size of the first layer (27) is larger than the pore size of the second layer (28);
wherein in particular in any case the second layer (28) contains particles of PE, PTFE, SiO₂, in particular hollow glass, solid glass, foam glass or sand, PPS, aluminum oxide, or a mixture of at least two of said materials.

5. The filter element (1) according to any of the preceding claims,
wherein the surface filtration layer (14) is at least partially formed as a coating, but in any case the first and the second layer (27, 28) are formed as a coating, in particular by means of liquid deposition, spraying, brushing-on, dip coating, baking and/or a thermal spraying process, in particular flame spraying.

6. The filter element (1) according to any of the preceding claims,
wherein the three-dimensional support structure (23) has a truss-like configuration with rods (24.1, 24.2) which are connected to each other at nodes (25).

7. The filter element (1) according to any of the preceding claims,
wherein the three-dimensional support structure (23) comprises a grid-like structure forming at least two grid layers (23.1, 23.2, 23.3), of which one grid layer (23.1) faces the inflow side (8), in particular defines the inflow side (8), and the other grid layer (23.2) faces the outflow side (9), the grid layers (23.1, 23.2, 23.3) being connected to each other by rods (24.3) or webs;
wherein in particular the one and/or the other grid layer (23.1, 23.2, 23.3) has a configuration with rods (24.1, 24.2) interconnected at nodes (25) and defining openings (26.1), wherein in particular the one and/or the other grid layer (23.1, 23.2, 23.3) comprises a regular grid structure.

8. The filter element (1) according to claim 7,
wherein the at least two grid layers (23.1, 23.2, 23.3) are arranged such that the openings (26.1) of one of the two grid layers (23.1, 23.2, 23.3) are arranged offset from the openings (26.1) of the other one of the two grid layers (23.1, 23.2, 23.3).

9. The filter element (1) according to any of claims 7 to 8,
wherein the three-dimensional support structure (23) comprises three grid layers (23.1, 23.2, 23.3) lying one behind the other in the direction of flow between the inflow side (8) and the outflow side (9) of the filter body (2), with openings (26.1) of the central grid layer (23.3) being arranged offset from openings (26.1) of the other two grid layers (23.1, 23.2);
wherein in particular the three-dimensional support structure (23) comprises three grid layers (23.1, 23.2, 23.3) lying one behind the other in the direction of flow between the inflow side (8) and the outflow side (9) of the filter body (2), with openings (26.1) of the two outer grid layers (23.1, 23.2) being arranged in congruent manner.

10. The filter element (1) according to any of claims 7 to 9,
wherein the openings (26.1) of the one, the other one and/or the central grid layer (23.1, 23.2, 23.3) are triangular, quadrangular, in particular square, rectangular, rhombic or parallelogram-shaped, polygonal, round and/or elliptical; and/or wherein the webs or rods connecting two adjacent grid layers each are arranged offset from the nodes of the two grid layers.

11. The filter element (1) according to any of the preceding claims,
wherein the filter body (2) comprises furthermore a three-dimensional mother pore structure (40), wherein the three-dimensional support structure (23) is arranged at the inflow side (41) of the three-dimensional mother pore structure (40);
wherein in particular the three-dimensional mother pore structure (40) has a larger pore size than the three-dimensional support structure (23); and/or
wherein the filter element (1) is formed as a hollow body, wherein the inflow side (8) of the filter body (2) is arranged on an outer side of the hollow body and the outflow side (9) of the filter body (2) is arranged on an inner side of the hollow body.

12. A method of manufacturing an inherently stable, throughflow-porous filter element (1) for filtering foreign substances from a gas stream, wherein a filter body (2) is formed of plastic and having an inflow side (8) and an opposite outflow side (9), the method comprising the steps of:
manufacturing a three-dimensional support structure (23) by means of an additive manufacturing process, such that cavities (26) are formed in the three-dimensional support structure (23), through which cavities (26) gas can flow from the inflow side (8) to the outflow side (9);
forming a surface filtration layer (14) by partially filling the cavities (26) of the three-dimensional support structure (23),
wherein the three-dimensional support structure (23) comprises a plastic material.

13. The method according to claim 12,
wherein a cage structure open towards the inflow side (8) is formed when the three-dimensional support structure (23) is manufactured by means of the additive manufacturing process; and/or
wherein during manufacture of the three-dimensional support structure (23) by means of the additive manufacturing process, basket-like, cup-like or funnel-like cavities (26) are formed, each having a bottom side and an opposite open side, the open side facing the inflow side (8);
wherein in particular for each of the basket-like, cup-like or funnel-like cavities (26) a lateral boundary is formed which connects the bottom side to the open side and has openings through which adjacent ones of the basket-like, cup-like or funnel-like cavities (26) communicate with each other;
wherein in particular front openings (26.1) are formed in the open side of a respective cavity (26) and rear openings are formed in the bottom side and/or the lateral boundary thereof, wherein in an orthogonal projection from the open side to the bottom side, a plurality of rear openings of the bottom side and/or the lateral boundary is located within an area defined by a front opening (26.1) of the open side;
wherein in particular only one opening (26.1) is formed in the open side of a respective cavity (26).

14. The method according to claim 12 or 13,
comprising embedding material in cavities (26) of the support structure (23) to form a first layer (27) of the surface filtration layer (14), such that a larger part of the material for the first layer fills cavities (26) of the three-dimensional support structure (23);
comprising in particular applying at least one second layer (28) to the first layer (27), in particular such that the second layer (28) forms a surface filtration layer (14) on the inflow side (8) of the filter body (2).

15. The method according to any of claims 12 to 14,
wherein the surface filtration layer (14) is formed as a coating, in particular by means of liquid deposition, spraying, brushing-on, dip coating, baking and/or a thermal spraying process, in particular flame spraying; and/or
wherein during manufacture of the three-dimensional support structure (23) by means of an additive manufacturing process, in particular laser sintering or stereolithography, a truss-like configuration is formed with rods (24.1, 24.2, 24.3) or webs which are connected to each other at nodes (25); and/or
wherein during manufacture of the three-dimensional support structure (23), there is formed a grid-like structure forming at least two grid layers (23.1, 23.2, 23.3), one grid layer (23.1) defining the inflow side (8) and the other grid layer (23.2) facing the outflow side (9), wherein the grid layers (23.1, 23.2, 23.3) are interconnected by rods (24.3) or webs.

## Revendications

1. Elément filtrant (1) auto-stable et poreux à l'écoulement destiné à filtrer des substances étrangères dans un flux de gaz, **caractérisé en ce que** l'élément filtrant comprend les caractéristiques suivantes :
un corps filtrant (2) en matière plastique comportant un côté d'entrée (8) et un côté de sortie (9) opposé, dans lequel une couche de filtration de surface (14) est formée sur le côté d'entrée (8),
dans lequel le corps filtrant (2) présente une structure de support tridimensionnelle (23) fabriquée par un processus de fabrication additive, qui présente des cavités (26) à travers lesquelles le gaz peut s'écouler du côté d'entrée (8) vers le côté de sortie (9), et
dans lequel la couche de filtration de surface (14) remplit au moins partiellement les cavités (26) de la structure de support tridimensionnelle (23).

2. Élément filtrant (1) selon la revendication 1, dans lequel la structure de support tridimensionnelle (23) présente une structure de cage ouverte vers le côté d'entrée (8) ; et/ou
dans lequel la structure de support tridimensionnelle (23) forme des cavités (26) en forme de panier, de coupe ou d'entonnoir, chacune comportant un côté inférieur et un côté ouvert opposé, le côté ouvert faisant face au côté d'entrée (8) ;
dans lequel, en particulier, les cavités (26) en forme de panier, de coupe ou d'entonnoir présentent chacune une limite latérale qui relie le côté inférieur au côté ouvert et qui présente des ouvertures par lesquelles des cavités (26) voisines en forme de panier, de coupe ou d'entonnoir communiquent les unes avec les autres;
dans lequel, en particulier, le côté ouvert d'une cavité respective (26) présente des ouvertures avant (26.1) et le côté inférieur et/ou la limite latérale présente des ouvertures arrière, dans lequel, dans une projection orthogonale du côté ouvert au côté inférieur, une pluralité d'ouvertures arrière du côté inférieur et/ou de la limite latérale se trouvent à l'intérieur d'une surface définie par une ouverture avant (26.1) du côté ouvert ;
dans lequel, en particulier, le côté ouvert d'une cavité respective (26) ne présente qu'une seule ouverture (26.1).

3. Élément filtrant (1) selon la revendication 1 ou 2, dans lequel le corps filtrant (2) définit une direction d'épaisseur s'étendant entre son côté d'entrée (8) et son côté de sortie (9) et la couche de filtration de surface (14) remplit des cavités (26) de la structure de support tridimensionnelle (23) sur au moins 10 % de l'épaisseur de la couche de filtration de surface (14), notamment sur au moins 25 % de l'épaisseur, notamment sur au moins 50 % de l'épaisseur, notamment entre 25 % et 100 % de l'épaisseur, notamment entre 50 % et 75 % de l'épaisseur ; et/ou la couche de filtration de surface (14) remplit des cavités (26) de la structure de support tridimensionnelle (23) sur au moins 10 % de l'épaisseur de la structure de support tridimensionnelle (23), notamment sur au moins 25 % de l'épaisseur, notamment sur au moins 50 % de l'épaisseur, notamment entre 25 % et 100 % de l'épaisseur, notamment entre 50 % et 75 % de l'épaisseur.

4. Élément filtrant (1) selon l'une quelconque des revendications 1 à 3, dans lequel la couche de filtration de surface (14) présente une première couche (27) qui remplit au moins en partie, en particulier pour sa plus grande partie, notamment sensiblement complètement, des cavités (26) de la structure de support tridimensionnelle (23) ;
dans lequel en particulier la couche de filtration de surface (14) présente au moins une seconde couche (28) qui est appliquée sur la première couche (27) à partir du côté d'entrée (8), dans lequel en particulier la seconde couche (28) forme une surface sur le côté d'entrée (8) du corps filtrant (2) ;
dans lequel en particulier la seconde couche (28) occupe au moins partiellement des interstices dans la première couche (27) ;
dans lequel la première couche (27) et la seconde couche (28) présentent des tailles de pores différentes, la taille des pores de la première couche (27) étant notamment supérieure à la taille des pores de la seconde couche (28)
dans lequel en particulier la seconde couche (28) contient des particules de PE, de PTFE, de SiO₂, en particulier de verre creux, de verre plein, de verre mousse ou de sable, de PPS, d'oxyde d'aluminium, ou d'un mélange d'au moins deux des matériaux mentionnés.

5. Elément filtrant (1) selon l'une des revendications précédentes, dans lequel la couche de filtration de surface (14) est au moins partiellement, mais en tout cas la première et la seconde couche (27, 28), réalisée sous forme de revêtement, en particulier au moyen d'un dépôt de liquide, d'une pulvérisation, d'un brossage, d'un revêtement par immersion, d'une cuisson et/ou d'un procédé de pulvérisation thermique, en particulier d'une pulvérisation à la flamme.

6. Élément filtrant (1) selon l'une des revendications précédentes, dans lequel la structure de support tridimensionnelle (23) présente une configuration en treillis avec des barres (24.1, 24.2) qui sont reliées entre elles au niveau de points nodaux (25).

7. Élément filtrant (1) selon l'une des revendications précédentes, dans lequel la structure de support tridimensionnelle (23) présente une structure en forme de grille qui forme au moins deux couches de grille (23.1, 23.2, 23.3), dont l'une (23.1) est tournée vers le côté d'entrée (8), définissant en particulier le côté d'entrée (8), et l'autre (23.2) est tournée vers le côté de sortie (9), dans lequel les couches de grille (23.1, 23.2, 23.3) sont reliées entre elles par des barres (24.3) ou des entretoises ;
dans lequel en particulier l'une et/ou l'autre couche de grille (23.1, 23.2, 23.3) présentent une configuration avec des barres (24.1, 24.2) qui sont reliées entre elles au niveau de points nodaux (25) et définissent des ouvertures (26.1), en particulier dans lequel l'une et/ou l'autre couche de grille (23.1, 23.2, 23.3) présente une structure de grille régulière.

8. Elément filtrant (1) selon la revendication 7, dans lequel lesdites au moins deux couches de grille (23.1, 23.2, 23.3) sont disposées de telle sorte que les ouvertures (26.1) de l'une des deux couches de grille (23.1, 23.2, 23.3) sont décalées par rapport aux ouvertures (26.1) de l'autre des deux couches de grille (23.1, 23.2, 23.3).

9. Élément filtrant (1) selon l'une des revendications 7 à 8, dans lequel la structure de support tridimensionnelle (23) comporte trois couches de grille (23.1, 23.2, 23.3) disposées les unes derrière les autres dans la direction d'écoulement entre le côté d'entrée (8) et le côté de sortie (9) du corps filtrant (2), dans lequel les ouvertures (26.1) dans la couche de grille centrale (23.3) sont disposées de manière décalée par rapport aux ouvertures (26.1) dans les deux autres couches de grille (23.1, 23.2) ; dans lequel, en particulier, la structure de support tridimensionnelle (23) présente trois couches de grille (23.1, 23.2, 23.3) disposées les unes derrière les autres dans la direction d'écoulement entre le côté d'entrée (8) et le côté de sortie (9) du corps filtrant (2), dans lequel les ouvertures (26.1) des deux couches de grille extérieures (23.1, 23.2) sont disposées de manière congruente.

10. Élément filtrant (1) selon l'une des revendications 7 à 9, dans lequel les ouvertures (26.1) de l'une, de l'autre et/ou de la couche de grille centrale (23.1, 23.2, 23.3) sont triangulaires, quadrangulaires, notamment carrées, rectangulaires, en forme de losange ou de parallélogramme, polygonales, rondes et/ou elliptiques ; et/ou
dans lequel les entretoises ou les barres qui relient deux couches de grille adjacentes sont disposées de manière décalée par rapport aux noeuds des deux couches de grille.

11. Elément filtrant (1) selon l'une des revendications précédentes, dans lequel le corps filtrant (2) présente en outre une structure de pores mère tridimensionnelle (40), dans lequel la structure de support tridimensionnelle (23) est disposée du côté d'entrée (41) de la structure de pores mère tridimensionnelle (40) ; dans lequel en particulier la structure de pores mère tridimensionnelle (40) présente une taille de pores plus grande que la structure de support tridimensionnelle (23) ; et/ou
dans lequel l'élément filtrant (1) est conçu comme un corps creux, dans lequel le côté d'entrée (8) du corps filtrant (2) se trouve sur un côté extérieur du corps creux et le côté de sortie (9) du corps filtrant (2) se trouve sur un côté intérieur du corps creux.

12. Procédé de fabrication d'un élément filtrant (1) auto-stable et poreux à l'écoulement destiné à filtrer des substances étrangères dans un flux de gaz, dans lequel un corps filtrant (2) en matière plastique comporte un côté d'entrée (8) et un côté de sortie (9) opposé, le procédé comprenant les étapes suivantes consistant à :
fabriquer une structure de support tridimensionnelle (23) au moyen d'un procédé de fabrication additive, de telle sorte que des cavités (26) soient formées dans la structure de support tridimensionnelle (23), à travers lesquelles le gaz peut s'écouler du côté d'entrée (8) vers le côté de sortie (9) ;
former une couche de filtration de surface (14) en remplissant partiellement les cavités (26) de la structure de support tridimensionnelle (23),
dans lequel la structure de support tridimensionnelle (23) est constituée d'un matériau plastique.

13. Procédé selon la revendication 12, dans lequel, lors de la fabrication de la structure de support tridimensionnelle (23) au moyen du processus de fabrication additive, une structure de cage ouverte vers le côté d'entrée (8) est formée ; et/ou
lors de la fabrication de la structure de support tridimensionnelle (23) au moyen du processus de fabrication additive, des cavités (26) en forme de panier, de coupe ou d'entonnoir sont formées, chacune comportant un côté inférieur et un côté ouvert opposé, le côté ouvert faisant face au côté d'entrée (8) ; dans lequel, en particulier pour chacune des cavités (26) en forme de panier, de coupe ou d'entonnoir, est formée une limite latérale qui relie le côté inférieur au côté ouvert et qui présente des ouvertures à travers lesquelles des cavités (26) adjacentes en forme de panier, de coupe ou d'entonnoir sont reliées les unes aux autres ;
dans lequel, en particulier, des ouvertures avant sont formées dans le côté ouvert d'une cavité respective (26) et des ouvertures arrière sont formées dans le côté inférieur et/ou dans sa limite latérale, une pluralité d'ouvertures arrière du côté inférieur et/ou de la limite latérale se trouvant, dans une projection orthogonale du côté ouvert au côté inférieur, à l'intérieur d'une surface définie par une ouverture avant (26.1) du côté ouvert ;
dans lequel, en particulier, une seule ouverture (26.1) est formée dans le côté ouvert d'une cavité respective (26).

14. Procédé selon la revendication 12 ou 13, comprenant l'incorporation de matériau dans les cavités (26) de la structure de support (23) pour former une première couche (27) de la couche de filtration de surface (14), de telle sorte qu'une plus grande partie du matériau pour la première couche remplisse des cavités (26) de la structure de support tridimensionnelle (23) ;
comprenant notamment l'application d'au moins une seconde couche (28) sur la première couche (27), notamment de telle sorte que la seconde couche (28) forme une couche de filtration de surface (14) sur le côté d'entrée (8) du corps filtrant (2).

15. Procédé selon l'une des revendications 12 à 14, dans lequel la couche de filtration de surface (14) est réalisée sous forme de revêtement, en particulier au moyen d'un dépôt de liquide, d'une pulvérisation, d'un brossage, d'un revêtement par immersion, d'une cuisson et/ou d'un procédé de pulvérisation thermique, en particulier d'une pulvérisation à la flamme ; et/ou
dans lequel, lors de la fabrication de la structure de support tridimensionnelle (23), une configuration en forme de treillis avec des barres (24.1, 24.2, 24.3) ou des entretoises, qui sont reliées entre elles au niveau de noeuds (25), est réalisée au moyen d'un processus de fabrication additive, en particulier par frittage au laser ou stéréolithographie ; et/ou
dans lequel, lors de la fabrication de la structure de support tridimensionnelle (23), on réalise une structure en forme de grille qui forme au moins deux couches de grille (23.1, 23.2, 23.3), l'une des couches de grille (23.1) définissant le côté d'entrée (8) et l'autre couche de grille (23.2) étant tournée vers le côté de sortie (9), les couches de grille (23.1, 23.2, 23.3) étant reliées entre elles par des barres (24.3) ou des entretoises.
